# EUROPEAN PATENT APPLICATION

(11) **EP 1 041 794 A2**
(43) Date of publication of application: **04.10.2000**
(21) Application number: 99309947.2
(22) Date of filing: 10.12.1999
(51) Int. Cl.: H04L 29/06

(54) **Network-device control apparatus and communication system**

(30) Priority: 31.03.1999 JP 9109499
(71) Applicant: FUJITSU LIMITED, Kawasaki-shi, Kanagawa 211-8588 (JP)
(72) Inventor: Miyamoto, Kazuyo, c/o Fujitsu Ltd, Kawasaki-shi, Kanagawa 211-8588 (JP); Kano, Shinya, c/o Fujitsu Ltd, Kawasaki-shi, Kanagawa 211-8588 (JP); Kurose, Yoshitoshi. Fujitsu ltd,, Kawasaki-shi, Kanagawa 211-8588 (JP); Nomura, Yuji. Fujitsu Ltd., Kawasaki.shi Kanagawa 211-8588 (JP)
(74) Representative: Stebbing, Timothy Charles

(57) **Abstract**

Disclosed is a communication system in which information is sent and received in accordance with a client - server protocol between a network device (13₁-13₃) serving as a client constructing a network and a network-device control apparatus (14, 15) as a server for responding to a request from the network device by executing predetermined processing. The client transmits a server-initiative approval message to the server for granting initiative to the server, and the server, after receiving this message, specifies a required configuration for the client when appropriate.

## Description

This invention relates to a communication system and to an apparatus for controlling network devices. More particularly, the invention relates to a communication system equipped with network devices such as routers constructing a network and a network-device control apparatus for responding to requests from these network devices by executing predetermined processing, wherein the network device control apparatus configures the network devices in various ways in accordance with the client - server protocol. The invention relates also to the control apparatus for controlling the network devices in this manner.

The spread of networks has led to an increase in the number of network users and in the number of connected hosts, and this has been accompanied by an increase in traffic and by the diversification thereof. In order to operate a network and assure users bandwidth efficiently under these conditions, a mechanism for unified management of network resources based upon a certain policy has been proposed. In order to implement such a unified management mechanism, a network-device control apparatus constituting a server is provided with policy information and the server responds to requests from network devices, which are the clients, by executing processing based upon the policy information. The Common Open Policy Service (COPS) protocol, which is currently being standardized by the Internet Engineering Task Force (IETF), is a protocol that may be used to send and receive policy information between a server and a client.

The present invention relates to a communication system in which information is sent and received in accordance with a client - server protocol such as the COPS protocol and the server configures its clients in various ways in accordance with the policy information, and to the network-device control apparatus per se.

### (a) Current status of enterprise networks

With the growing use of networks based upon the IP (Internet Protocol), the IP-based integration not only of conventional data traffic but also of multimedia traffic such as audio and streaming video is proceeding in enterprise networks as well. In enterprise networks which thus integrate and accommodate a wide variety of traffic, problems and requirements for dealing with these problems can be summarized as the following two items:

### (1) Simplification of operation and management

In order for network devices such as routers, switches and end terminals (hosts) that constitute the components of a network to be operated properly, it is required that each network device be configured for an operation that is suited to the device. In such configuring of network devices, there is need for a great amount of information, such as the characteristics of the network device, the configuration of the network, the status of network utilization and user requests. Since such information increases as networks become larger in scale and higher in functionality, the configuring of network devices also becomes proportionally more complicated and there is the possibility that this will lead to higher cost of operation and management. Accordingly, the configuring of network devices for the particular operation needs to be simplified and automated.

### (2) Unified management of various information

In an enterprise network, management of user information, information concerning the applications provided and device information is required and so is management of operating policy. However, when the management of such a wide variety of information is spread over an enterprise network at a plurality of locations, there is the danger that network operation will be hampered by inconsistencies in information and mistakes made in configuring devices. In order to avoid this problem, unified management of various information is required in the network.

A PBN (Policy-based Networking) architecture, which is premised on centralized control and centralized management of network devices by a policy server, has been proposed and studied for the purpose of meeting the above-mentioned requirements of an enterprise network. The basic approach is to provide a policy server with policy information based upon the network administrator's knowledge and experience when the network is operated and having the policy server operate and manage the network autonomously in accordance with the information retained. In other words, by explicitly providing the policy server with an operating policy, each device in the network can refer to this policy information and, as a result, each device can be controlled and configured in a manner that reflects the given operating policy.

The RAP-WG (RSVP Admission Policy Working Group) of the IETF has proposed a PBN architecture through which allocation of resources in response to an RSVP request and admission control relating to users can be performed in accordance with a policy base. In order to perform admission control on demand through the RSVP (Resource Reservation Protocol) in response to a resource reservation request regarding a network device, the conventional technique, which does not employ PBN, requires that the network administrator provide all RSVP routers with admission information in advance. The problem with this technique, however, is that unified management of information cannot be achieved.

With the PBN architecture applied in admission control, the administrator can achieve unified management of information only by providing the policy server with policy information. According to the PBN architecture, a router (network device) that requests admission control requests the policy server for an admission decision using the COPS protocol when there is a resource reservation request in accordance with RSVP. Upon receiving an admission-control request from a network device, the policy server determines whether to allow or deny admission based upon the policy information and transmits the result of the determination to the network device.

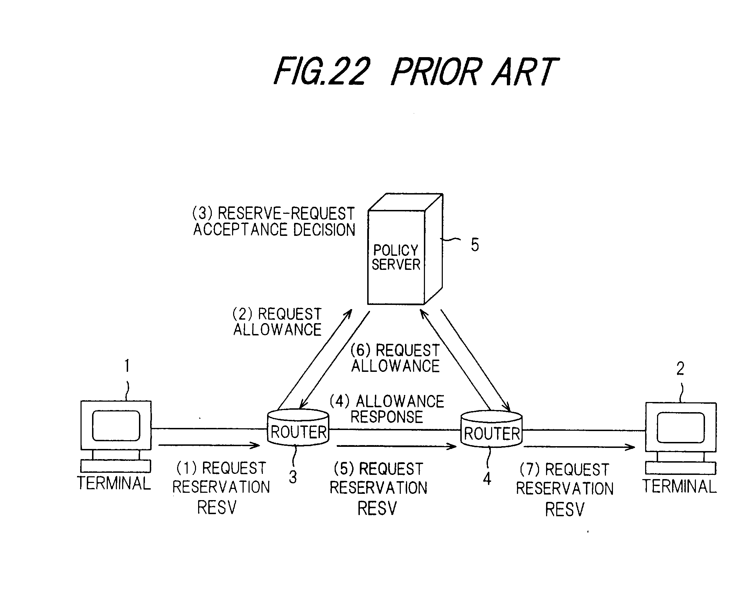

Fig. 22 is a diagram useful in describing conventional admission control using a policy server.
(1) A terminal (user) 1 transmits a reserve message (RESV) to a router 3.
(2) Upon receiving the reserve message (RESV), the router 3 queries a policy server 5 as to whether the reserve request should be accepted or not in accordance with the COPS protocol.
(3) Upon receiving the inquiry, the policy server 5 determines whether or not the terminal (user) 1 that transmitted the reserve request possesses the reservation privilege.
(4) If the terminal (user) 1 that transmitted the reserve request has the reservation privilege, the policy server 5 notifies the router 3 to allow the reservation.
(5) Upon receiving reservation permission, the router 3 transfers the reserve message (RESV), which was received from the terminal (user) 1, to the next router 4.
(6) In a manner similar to router 3, the router 4 queries the policy server 5 as to whether the reserve request should be accepted or not in accordance with the COPS protocol. Operation similar to that described above is then repeated.
(7) When a terminal 2, which is the other communicating party, finally receives the reserve message (RESV), reservation is completed. In other words, resources are assured by all routers 3, 4 between the terminal 1 that requested reservation and the terminal 2 that is the other communicating party, whereby the communication quality of the terminals 1 and 2 is guaranteed.

Thus, in accordance with the PBN architecture, admission control of a plurality of devices can be performed merely by providing a policy server with policy information. As a result, policy information need not be configured for each and every router.

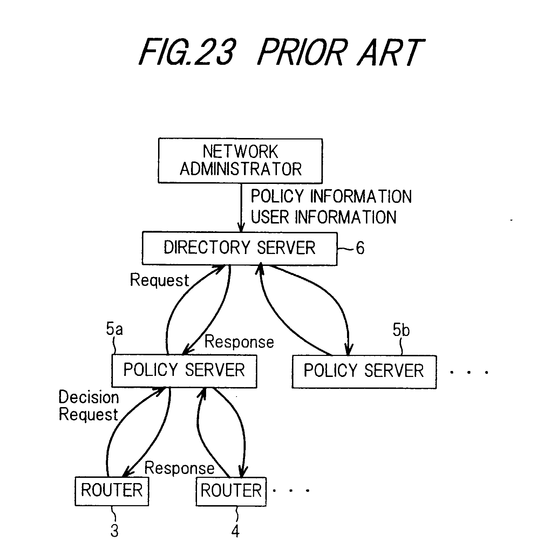

Admission control in a large-scale network requires multiple policy servers, and unified management of policy information referred to by each of the policy servers represents a challenge. A proposed solution is to provide a directory server 6, as shown in Fig. 23, and have the directory server 6 perform integrated management of user information, application information, network-device information and policy information. Exchange of information between policy servers 5a, 5b and the directory server 6 is carried out in accordance with the well-known LDAP (Lightweight Directory Access Protocol), and exchange of information between network devices and the policy servers is performed in accordance with the COPS protocol.

### (b) COPS protocol

The COPS protocol is a policy control protocol currently being planned by the IETF. Policy servers and clients (routers, etc.) are equipped with the COPS protocol as a protocol in accordance with which information is exchanged by the policy servers and clients in a unified management mechanism.

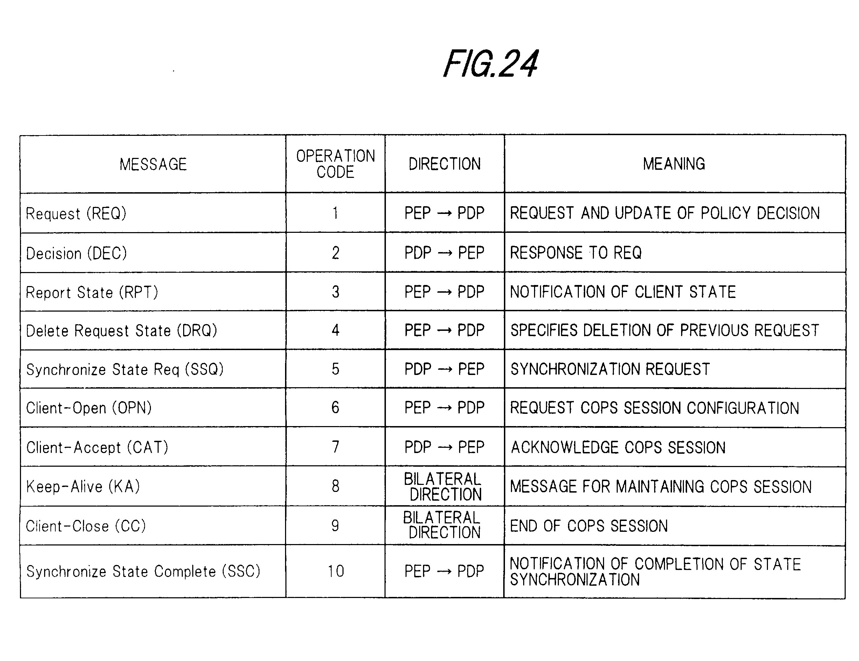

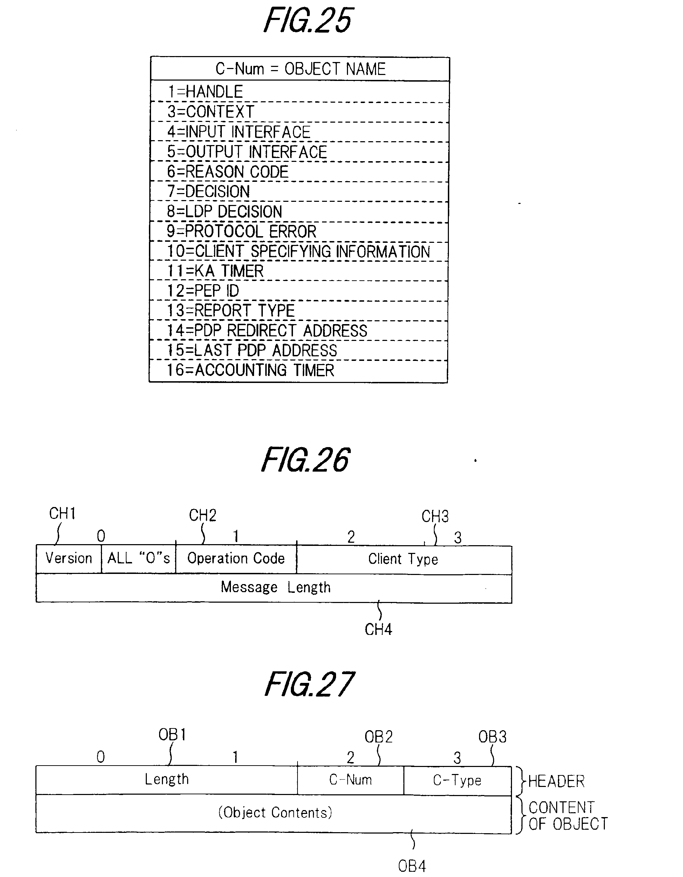

The COPS protocol has the messages shown in Fig. 24 and the objects shown in Fig. 25. A policy server (PDP: Policy Decision Point) and a client (PEP: Policy Enforcement Point) create transmission information by combining these messages and objects, send and receive this information and make possible control of clients PEP and management of resources based upon the policy of the policy server PDP.

### (b-1) Messages

As shown in Fig. 24, the messages are of ten types, namely (1) Request (REQ), (2) Decision (DEC), (3) Report State (RPT), (4) Delete Request State (DRQ), (5) Synchronize State Req (SSQ), (6) Client-Open (OPN), (7) Client-Accept (CAT), (8) Keep-Alive (KA), (9) Client-Close (CC) and (10) Synchronize State Complete (SSC).

### (1) Request (REQ):

The REQ message is a message used when the client PEP requests the server PDP for a configuration instruction. The REQ message is used also in requesting updating of configuration content requested earlier and, when such is the case, includes a handle value (described later) the same as that of a REQ message issued earlier.

### (2) Decision (DEC):

There are two types of DEC messages.

The first message is a solicited DEC message (a message in response to a request). The first DEC message is an answer message from the server PDP in response to a policy-decision inquiry request (REQ) sent from the client PEP to the server PDP. It contains a decision that is the result of the inquiry. When the content of the REQ message contains an error, error information is placed in the DEC message and sent back to the client.

The second message is an unsolicited DEC message. This is a message by which the server PDP supplies an unsolicited message.

### (3) Report State (RPT):

The RPT message is a message through which a client PEP that has received the DEC message from the server PDP responds as to whether the particular configuring processing could be executed or not.

### (4) Delete Request State (DRQ):

The DRQ message is one issued solely by the client PEP. The message is for deleting a handle value used thus far by a REQ or DEC message and for deleting a request-state condition (set state) associated with the handle value. A request state which the client PEP does not explicitly delete by a DRQ message continues to be retained by both the client PEP and server PDP.

### (5) Synchronize State Req (SSQ):

The SSQ message is a message by which the server PDP requests the client PEP to resend, by an REQ message, request-state information that was specified by a handle value.

### (6) Client-Open (OPN):

The OPN message is a message by which the client PEP requests the server PDP to start a COPS session.

### (7) Client-Accept (CAT):

The CAT message is one by which the server PDP grants connection permission in response to an OPN message. The message contains a keep-alive timer value designated by the server PDP and transmit interval (ACCT timer) value of a period RPT message.

### (8) Keep-Alive (KA):

The KA message is a message transmitted in order to maintain a connection when there is no communication activity between the client PEP and server PDP. Transmission timing is produced by the client PEP. The client PEP transmits the KA message when 1/4 to 3/4 of a basic KA timer value has elapsed following the end of communication activity with respect to the server PDP. The server PDP transmits the KA message to the client PEP at the moment it receives the KA message from the client PEP.

Both the client PEP and server PDP judge that the connection is down when no communication activity has taken place following elapse of a period of time indicated by the KA timer value designated by the CAT message.

### (9) Client-Close (CC):

The CC message is for reporting the end of a COPS session. An error code must be set as the cause.

### (10) Synchronize State Complete (SSC):

The SSC message is for reporting that a synchronize request has been completed in response to the Synchronize State Request SSQ message. The client PEP transmits this message after all REQ messages for synchronization have been transmitted following receipt of the SSQ message.

Each of the ten COPS messages described above possesses a common COPS header shown in Fig. 26 and has a plurality of objects, the format of which is shown in Fig. 27, connected under the common header. (Fig. 30 illustrates a REQ message having a plurality of objects, and Fig. 31 illustrates a DEC message having a plurality of objects.)

In the COPS common header (Fig. 26), CH1 represents a 4-bit COPS version number, CH2 an 8-bit operation code of the message, CH3 the client type and CH4 the message length.

The operation code CH2 identifies the message. The client type CH3 identifies the client and has an enterprise-specific value. Interpretation of an object depends upon the client type. Message length CH4, which is message size represented by the length of an octet, includes the COPS header and all objects in capsule form.

### (b-2) Objects

There are 16 types of objects, which are shown in Fig. 25. Each has the format shown in Fig. 27, in which OB1 represents object length, which is the number of octets inclusive of the header constructing the object; OB2 represents the class number (C-Num) for identifying the information (object content) contained in the object; OB3 represents the class type (C-Type), which is a subtype of the information contained in the object; and OB4 is the object content.

The principal objects have the meaning set forth below.

### (1) Handle object (C-Num = 1, C-Type = 1):

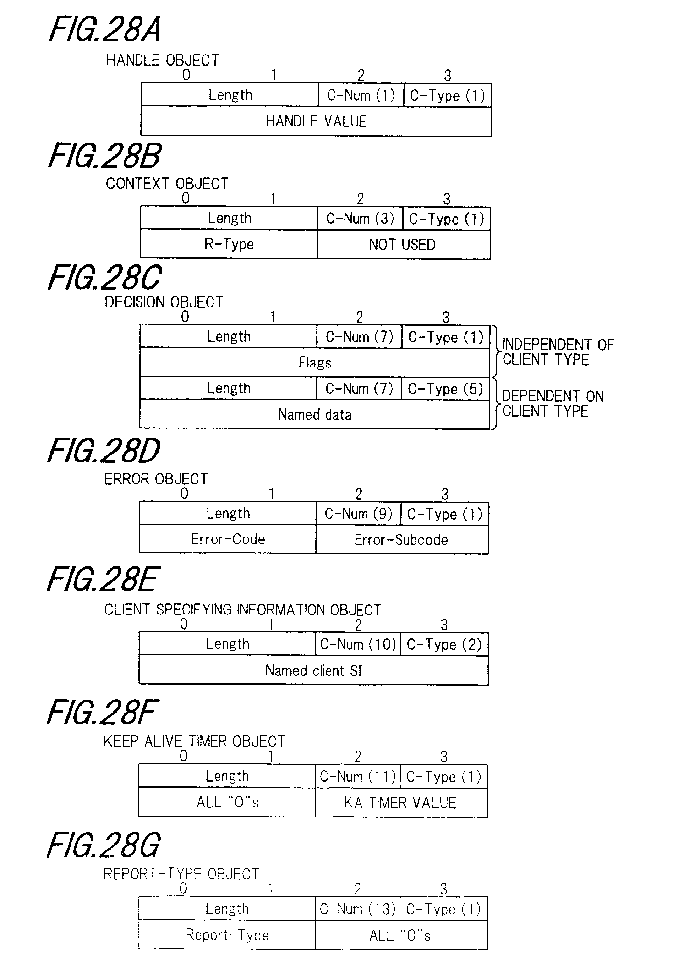

The handle object encapsulates a unique value (the handle value) for identifying the request state that has been installed (set) and has the format shown in Fig. 28A. The handle value is initially selected by the client PEP and is deleted by the client PEP when it is no longer required. The handle value is specified by the REQ message, RPT message and DRQ message. At the server PDP, the request of a client PEP is uniquely identified by the handle value.

### (2) Context object (C-Num = 3, C-Type = 1):

Context object specifies the type of an event triggered by a request (inquiry) based upon a REQ message and has the format shown in Fig. 28B. A 16-bit R-Type (Request-Type) flag takes on values of 0001, 0002, 0004 and 0008, which make the following requests:
0001: admission control request
0002: resource allocation request
0004: output message request
0008: configuration request

The configuration request is for requesting queue composition information (number of queues, the bandwidth of each queue, priority on/off), filter-entry information (information for deciding which flow is entered in a queue), and other information.

### (3) Decision object (C-Num = 7, C-Type = 1 or 5):

Decision object is an object that notifies the client PEP, by way of a DEC message, of a decision made by the server PDP. As shown in Fig. 28C, there are a decision object (C-Num = 7, C-Type = 1) that is independent of client type and a decision object (C-Num = 7, C-Type = 5) that is dependent on client type.

The decision object that is independent of client type notifies of a decision by flags shown below. The decision object that is dependent on client type appends named decision data and specifies the configuration and resource allocation of the client PEP. The flags of the decision object (C-Num = 7, C-Type = 1) that is independent of client type are 0x01, 0x08, 0x10, 0x20, 0x40, 0x200 (where x is arbitrary), which have the following meanings:
0x01: Admit signaled (means refusal of request REQ if flag is set);
0x08: Trigger error (trigger error message if flag is set);
0x10: Null configuration (means no configuration if flag is set);
0x20: Install configuration (means setting of named data if flag is set);
0x40: Remove configuration (means removal of named data if flag is set); and
0x200: Solicited decision (means a solicited decision message in response to a REQ request if flag is set).

### (4) Error object (C-Num = 9, C-Type = 1):

Error object is for identifying a specific COPS protocol error and has the format shown in Fig. 28D.

Error code 1 means that the handle value is not correct; error code 3 is an error code of an error object attached to a DEC message in a case where a REQ message received by the server PDP is recognized as being abnormal; ... error code 9 is an error code of an error object attached to a CC message when KA reception times out.

### (5) Client specifying information object (C-Num = 10, C-Type = 2):

This object indicates information that specifies a client and has the format shown in Fig. 28E. This object is required for a REQ message, OPN message and RPT message, etc. Client specifying information Client SI is the name of an interface card or the like if the client is a router.

### (6) Keep alive timer object (C-Num = 11, C-Type = 1);

This object sets the KA timer value and has the format shown in Fig. 28F.

### (7) Report-Type object (C-Num = 13, C-Type = 1):

The report type object is an object for reporting success/failure of a setting specified by a DEC message in regard to the client PEP (i.e., success/failure of setting of named configuration) to the server PDP by way of an RPT message. This object has the format shown in Fig. 28G. There are Report Types 1 to 7, the meanings of which are as follows:
Report-Type 1: Commit (local resources of the client PEP have been allocated);
Report-Type 2: Accounting;
Report-Type 3: No Commit (failure of resource allocation of client PEP);
Report-Type 4: Installed (named configuration has been installed);
Report-Type 5: Removed (named configuration has been deleted);
Report-Type 6: Not Installed (named configuration could not be installed); and
Report-Type 7: Not Removed (named configuration could not be deleted).

### (b-3) REQ/DEC message communication

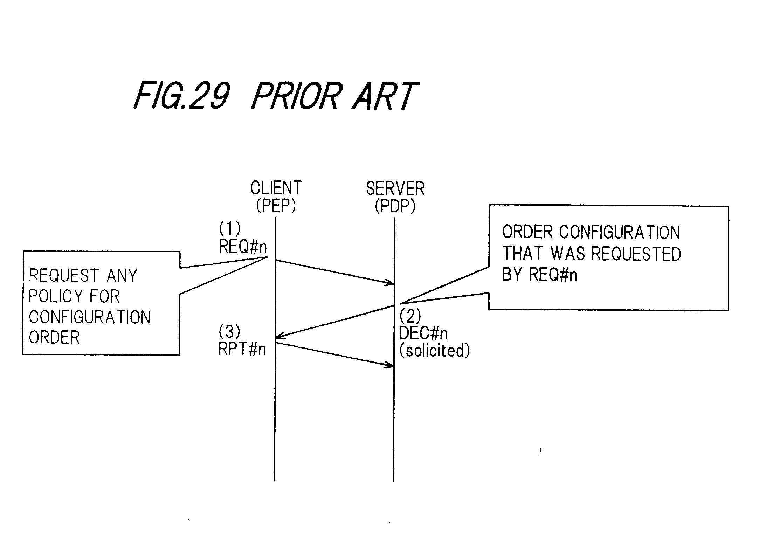

Fig. 29 is a diagram useful in describing the procedure of REQ/DEC message communication. Using an REQ message, the client PEP requests the server PDP for designation of a configuration. The server then makes a decision regarding the request based upon policy information and reports the result of the decision (the designation of configuration) to the client PEP by a DEC message.

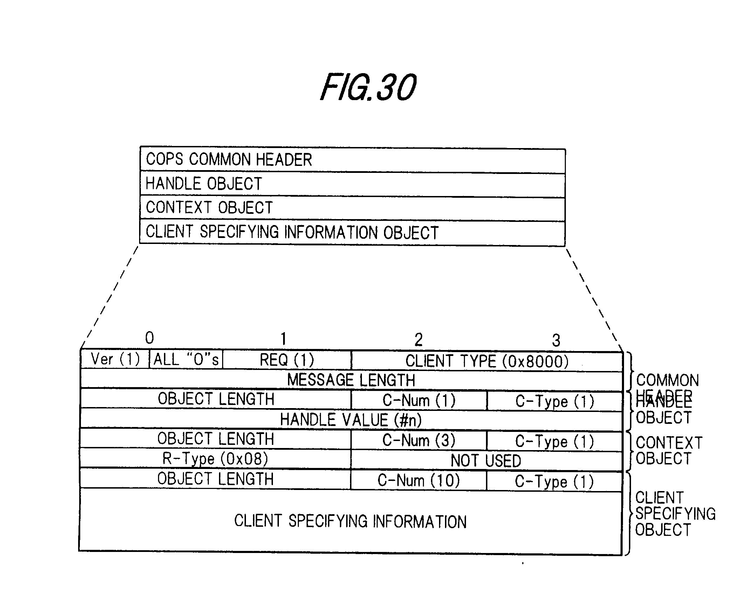

(1) The client PEP creates an REQ message (REQ#n), which is shown in Fig. 30 and, by way of example, requests the server PDP for a decision as to whether bandwidth allocation should be executed or not. The handle value #n of the REQ message is for identifying the request REQ and is installed in the server PDP and client PEP until deleted by the client PEP. Response, alteration and deletion in response to this request are carried out subsequently upon referring to the above-mentioned handle value.

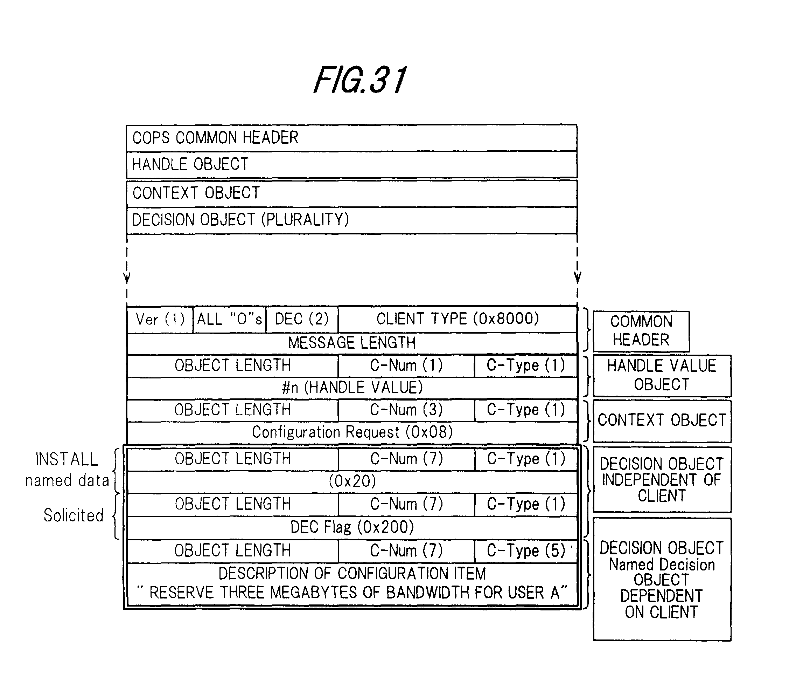

(2) Upon receiving the REQ message (REQ#n), the server PDP determines, based upon the policy information, whether bandwidth allocation requested by the above-mentioned REQ message is possible or not, creates a DEC message shown in Fig. 31 based upon the determination made and transmits the DEC message to the client PEP. In this example, the DEC message includes an order to the effect that three megabytes of bandwidth be reserved for user A.

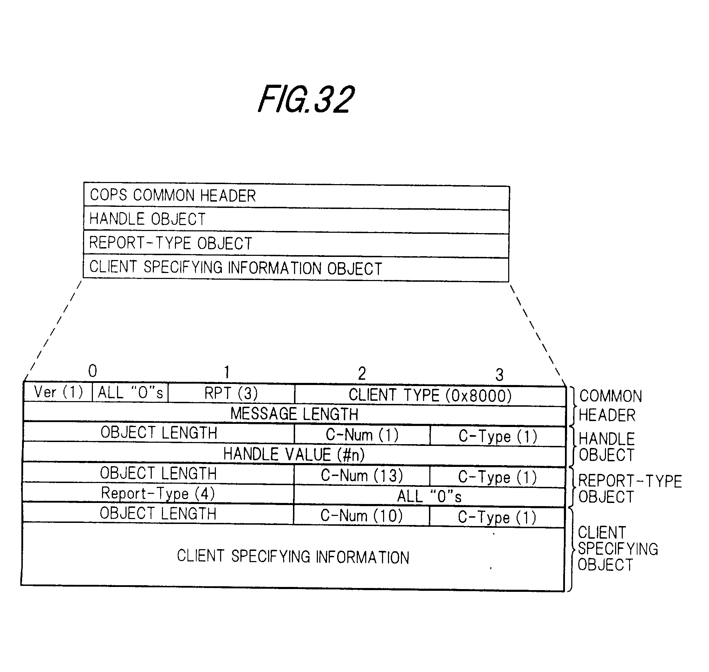

(3) If the DEC message is received, the client PEP, in accordance with the order in the above-mentioned DEC message, effects a setting for the purpose of reserving three megabytes of bandwidth for user A. The client PEP creates an RPT message (Fig. 32) to report the result of the setting, namely whether or not the bandwidth specified by the DEC message could reserved or not, to the server PDP. On the basis of this RPT message, the server PDP recognizes that the reservation of bandwidth has succeeded.

(4) If the server PDP thenceforth determines based upon a change in the network environment, for example, that an addition is to be made to the request in a REQ message REQ#n for which a determination has already been made, then the server PDP transmits a DEC message [DEC#n (unsolicited)] to the client PEP based upon the result of the addition determination.

(5) If the DEC message is received, the client PEP alters the configuration in accordance with the order in the DEC message. The client PEP further creates an RPT message to report the result of the configuration to the server PDP.

Thus, in accordance with COPS message communication, the server PDP makes a decision based upon the policy information when a request designating configuration is received from the client PEP and then responds to the client with the result of the decision. As long as a handle value is not specified by an REQ message in advance, there is no voluntary transmission of a DEC message. Consequently, a policy decision request is issued from the client PEP at all times, as shown in Fig. 29, and as long as there is no request, the server PDP does not specify any configuration whatsoever for the client PEP and does not manage or control the state thereof.

In a system for unified management of a network, however, it is desired that the server ascertain a change in the status of the network and configure the client optimally in accordance with the change in status in order to exploit resources more effectively in the network and provide more satisfactory service. In order to accomplish this, the conventional message communication method which requires a request for configuration from the client is unsatisfactory. What is required is a communication system in which when the server senses the need, it is capable of sending various configuration messages to a client on its own initiative.

Accordingly, it is desirable that configuring of a client is performed on the initiative of a server and that the server can order configuring of the client voluntarily whenever necessary.

It is also desirable that individual settings of a client can be discriminated and each setting can be managed (altered or deleted) individually.

According to a first aspect of the present invention, there is provided a communication system for sending and receiving information between a network device (router, etc.) constituting a client and a network-device control apparatus constituting a server in accordance with a client - server protocol, wherein the client transmits a server-initiative approval message for granting initiative to the server and, upon receiving the message, the server on its own initiative successively transmits configuration messages, which specify predetermined configurations, to the client when it becomes necessary to configure said client, and the client establishes a plurality of different configurations based upon the configuration messages.

If this arrangement is adopted, the server will be capable of sending the client messages for a variety of configurations voluntarily when the server senses the need.

According to a second aspect of the present invention, there is provided a communication system for sending and receiving information between a network device (router, etc.) constituting a client and a network-device control apparatus constituting a server in accordance with a client - server protocol, wherein the client transmits a server-initiative approval message for granting initiative to the server and, in response to receipt of the message, the server on its own initiative transmits a message specifying a required configuration to the client when it becomes necessary to configure said client, and the client establishes the configuration specified by this message, and then transmits a new server-initiative approval message to the server and thenceforth the client manages each configuration from the server independently in similar fashion.

If this arrangement is adopted, the server will be capable of sending the client messages for a variety of configurations voluntarily when the server senses the need. Moreover, each of the configurations from the server can be managed so as to be identifiable by different handle values.

Other features and advantages of the present invention will be apparent from the following description taken in conjunction with the accompanying drawings, in which:

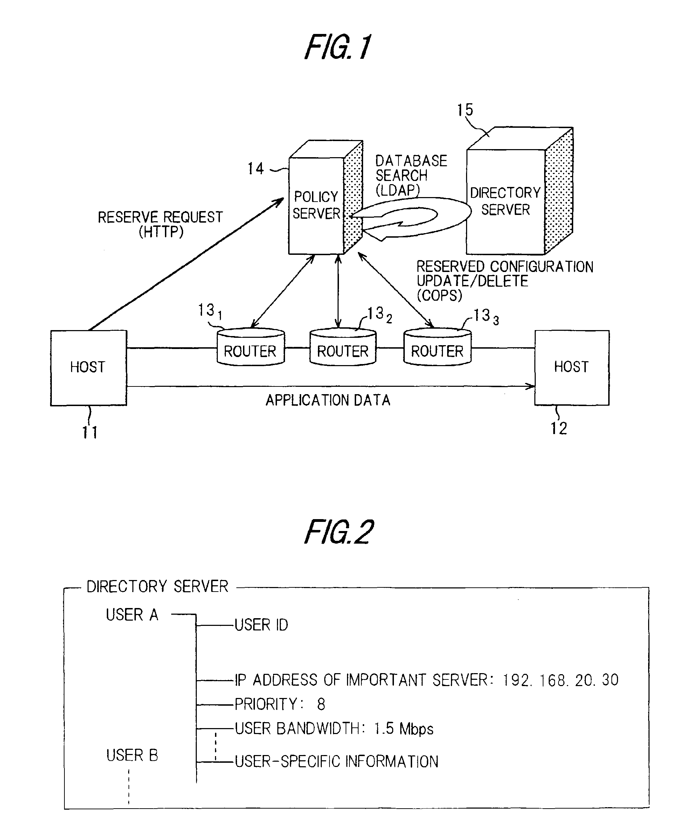

Fig. 1 is a diagram illustrating an example of the configuration of a network according to the present invention;
Fig. 2 is a diagram showing an example of user information that has been stored in a directory server;

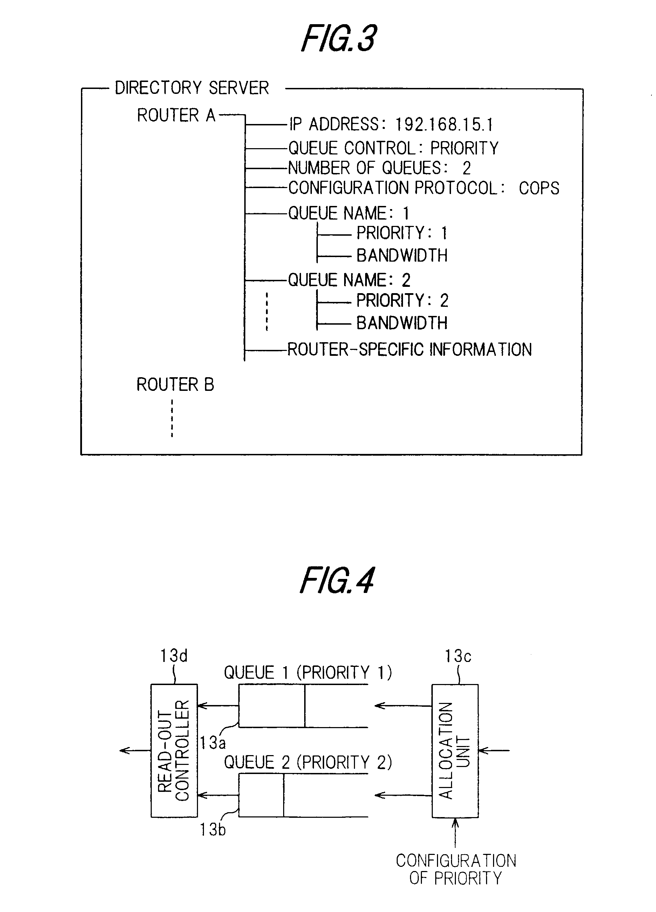

Fig. 3 is a diagram showing an example of router information that has been stored in the directory server;

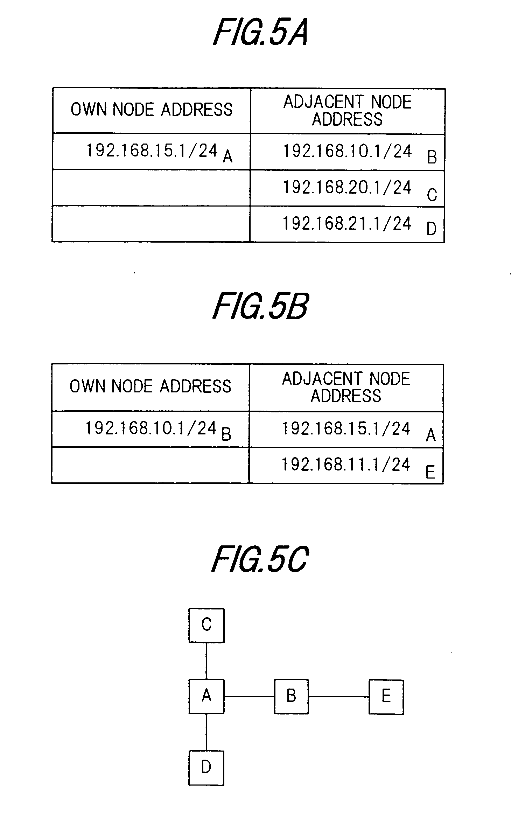

Fig. 4 is a diagram useful in describing priority control;
Figs. 5A, 5B and 5C are diagrams useful in describing the topology of network devices;

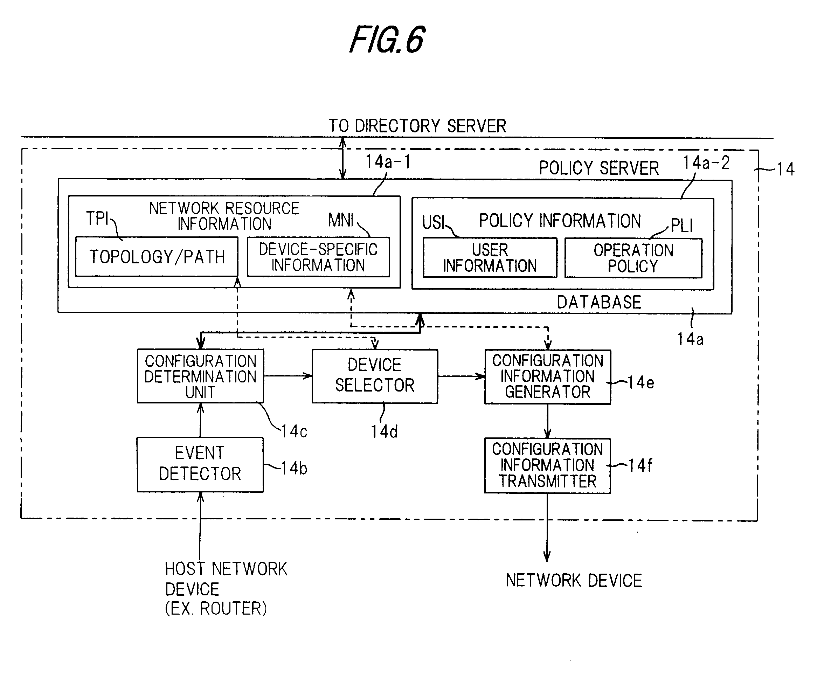

Fig. 6 is a block diagram illustrating a policy server;

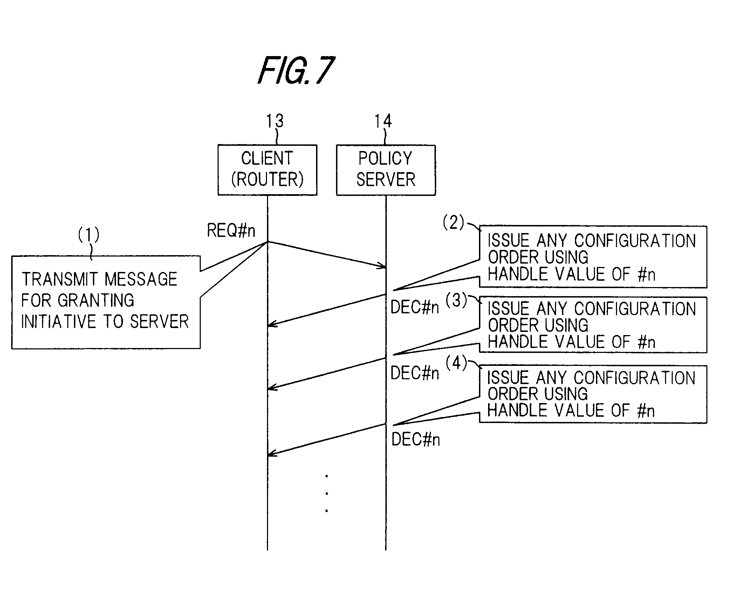

Fig. 7 illustrates a first policy control procedure based upon server initiative;

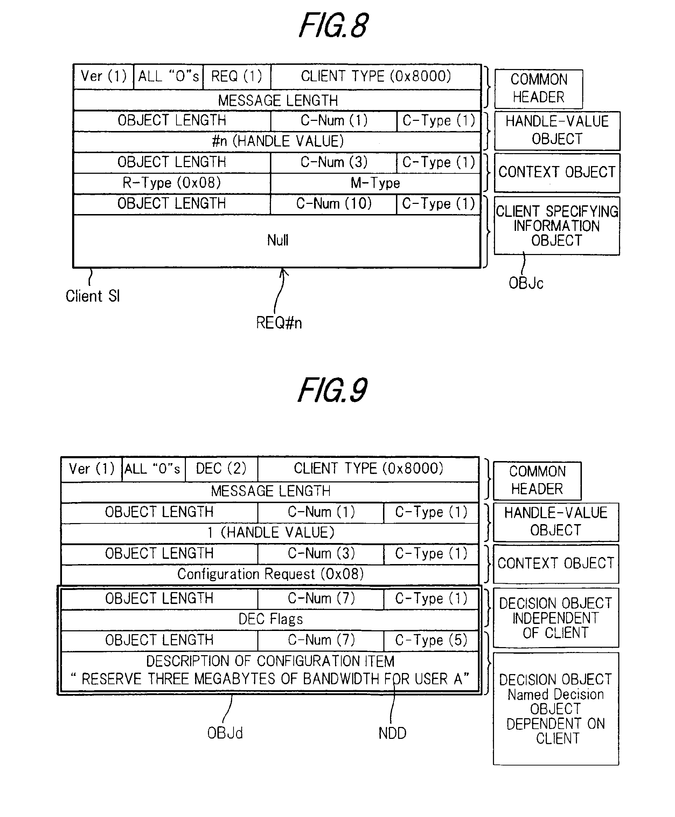

Fig. 8 illustrates an example of a REQ message for granting configuration initiative to a policy server;
Fig. 9 illustrates an example of a DEC message for when configuration initiative has been granted to a policy server;

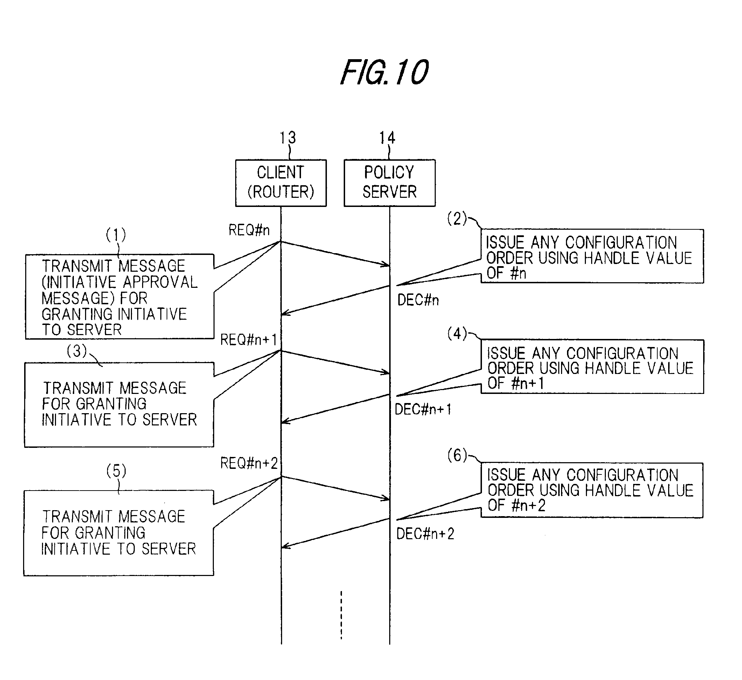

Fig. 10 illustrates a second policy control procedure based upon server initiative;

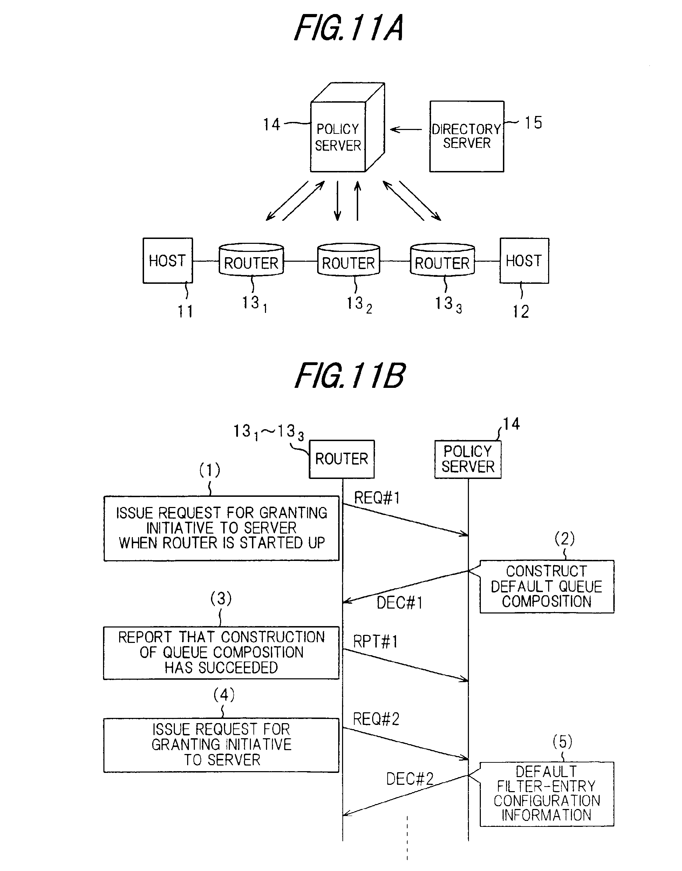

Figs. 11A and 11B illustrate an example of a configuration by a voluntary configuration request from a policy server (here a default setting is executed when a router is started up;

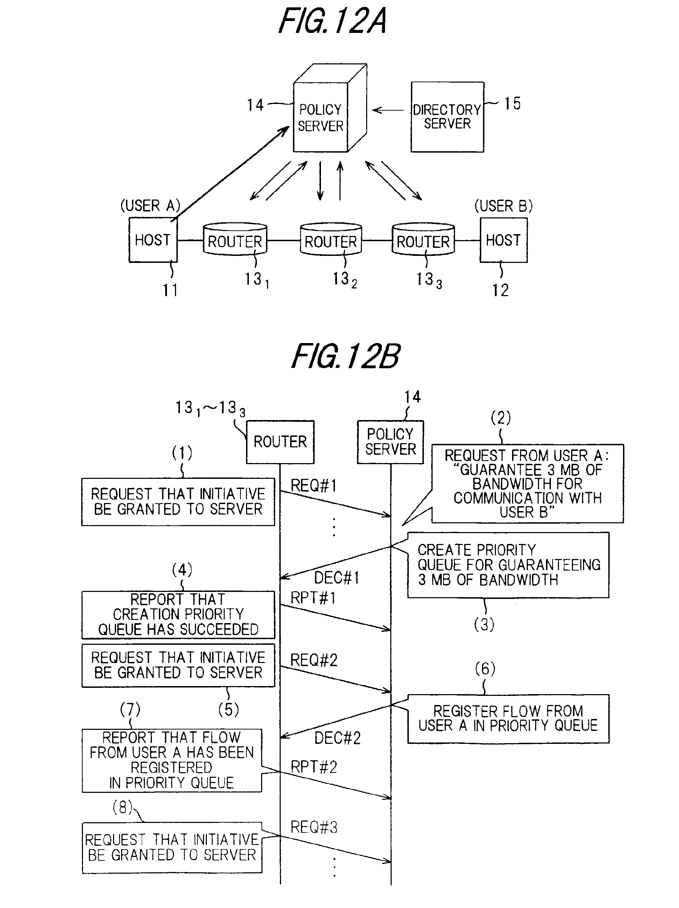

Figs. 12A and 12B illustrate an example of a configuration by a voluntary configuration request from a policy server (here the composition of a router queue is modified in accordance with a request from a user);

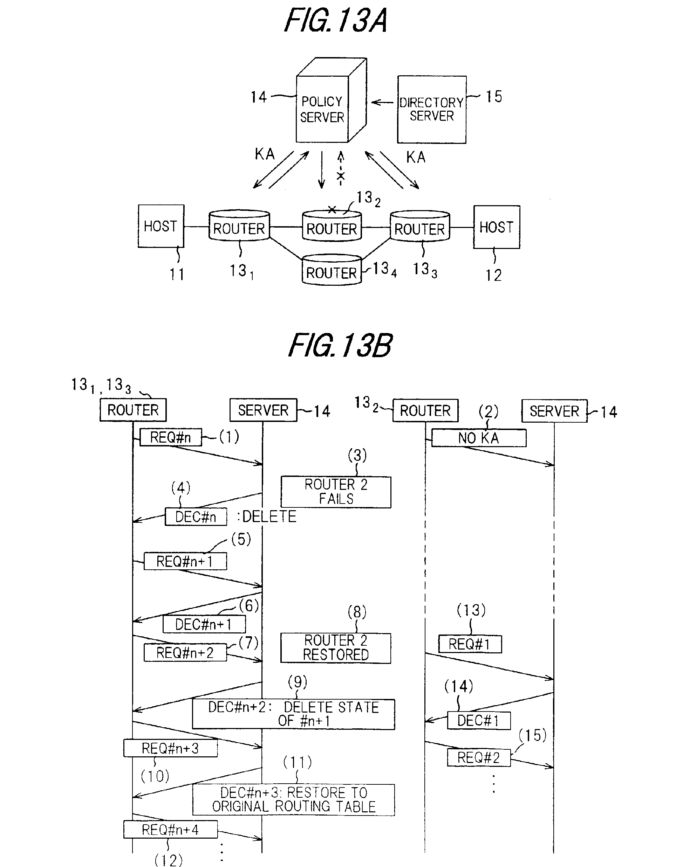

Figs. 13A and 13B illustrate an example of a configuration by a voluntary configuration request from a policy server (here routing information is modified at occurrence of a failure);

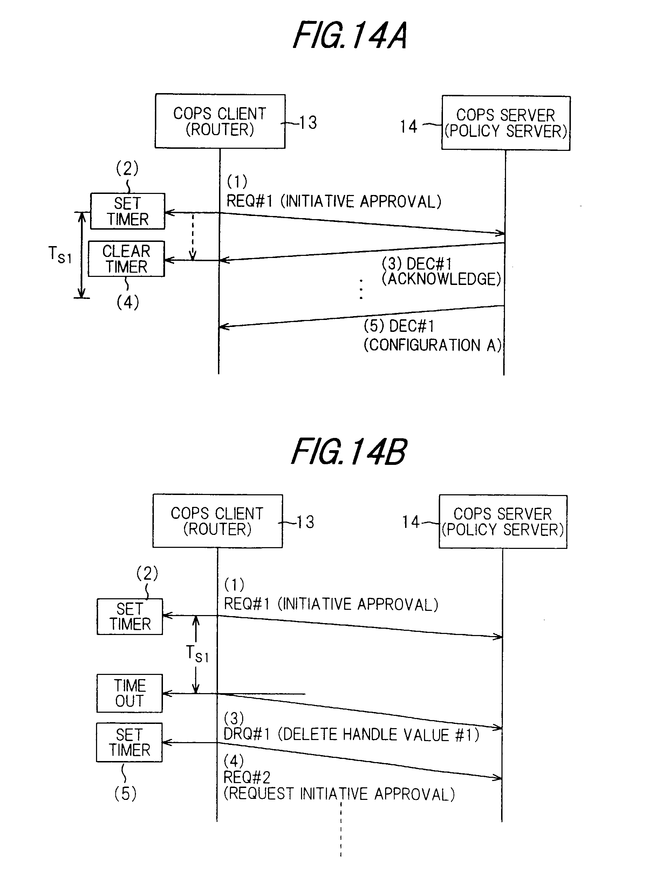

Figs. 14A and 14B are diagrams useful in describing timer processing for monitoring receipt of a DEC;

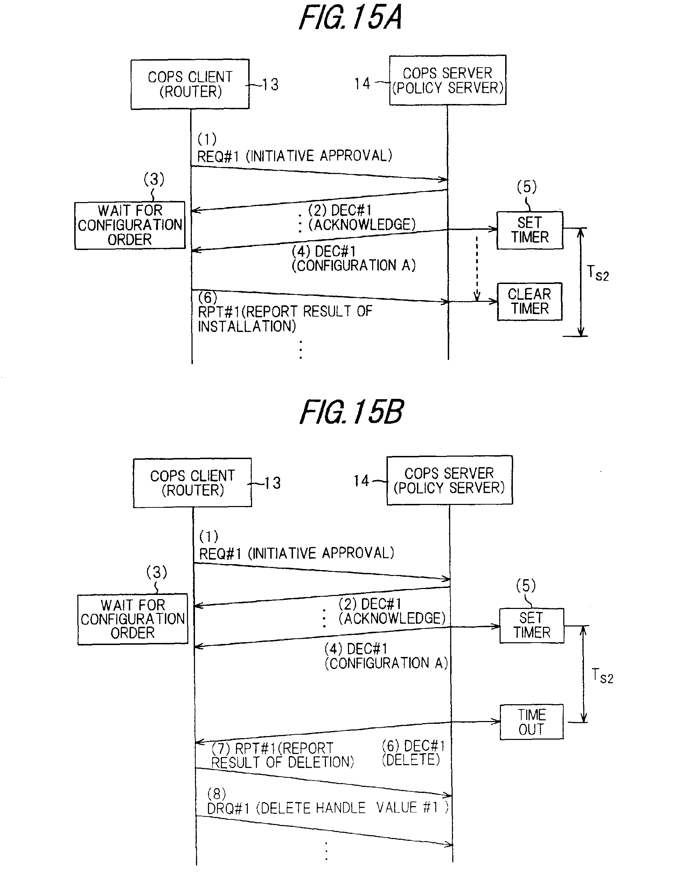

Figs. 15A and 15B are diagrams useful in describing timer processing for monitoring receipt of an RPT;

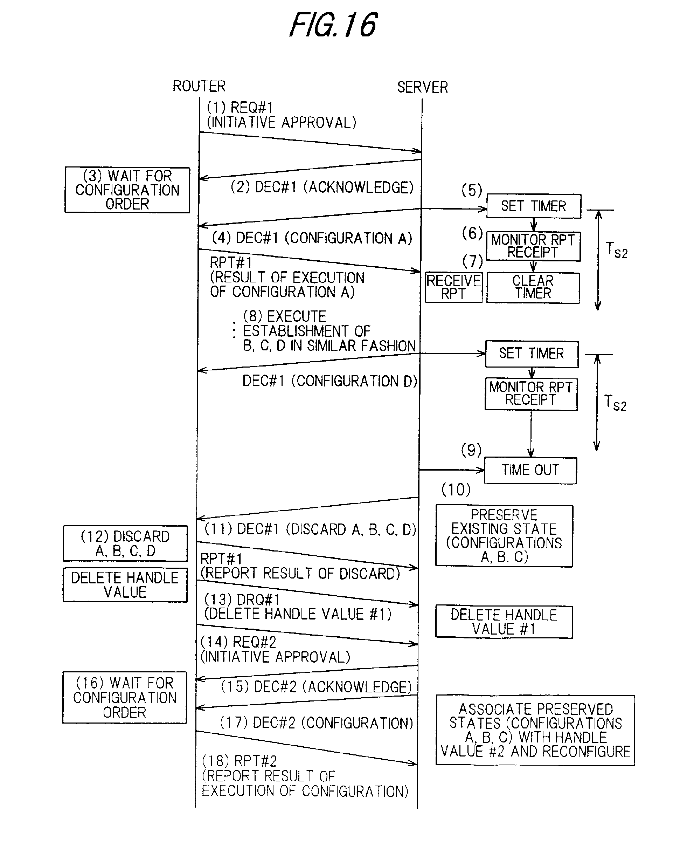

Fig. 16 is a diagram useful in describing recovery processing when message communication fails;

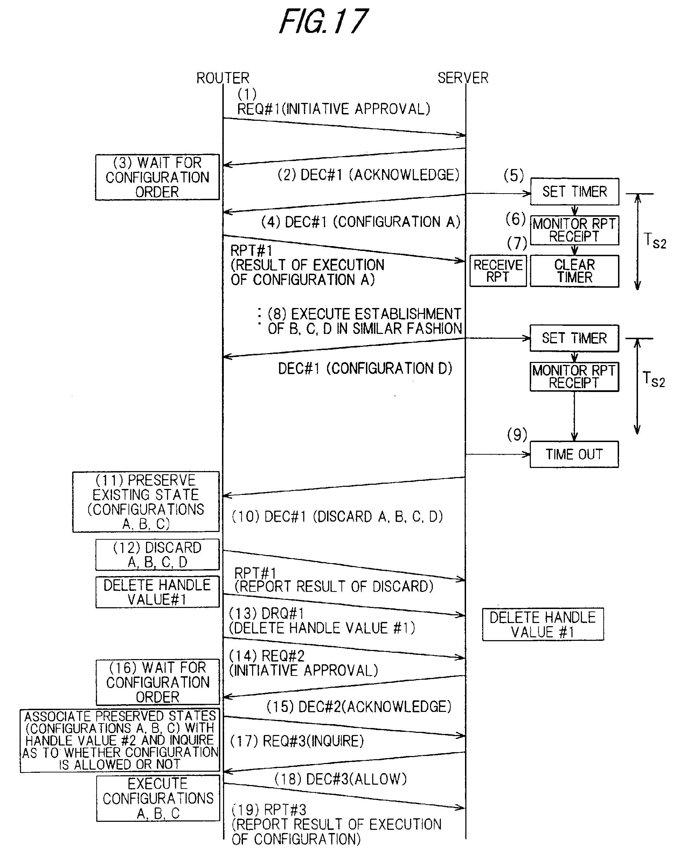

Fig. 17 is a diagram useful in describing different recovery processing when message communication fails;

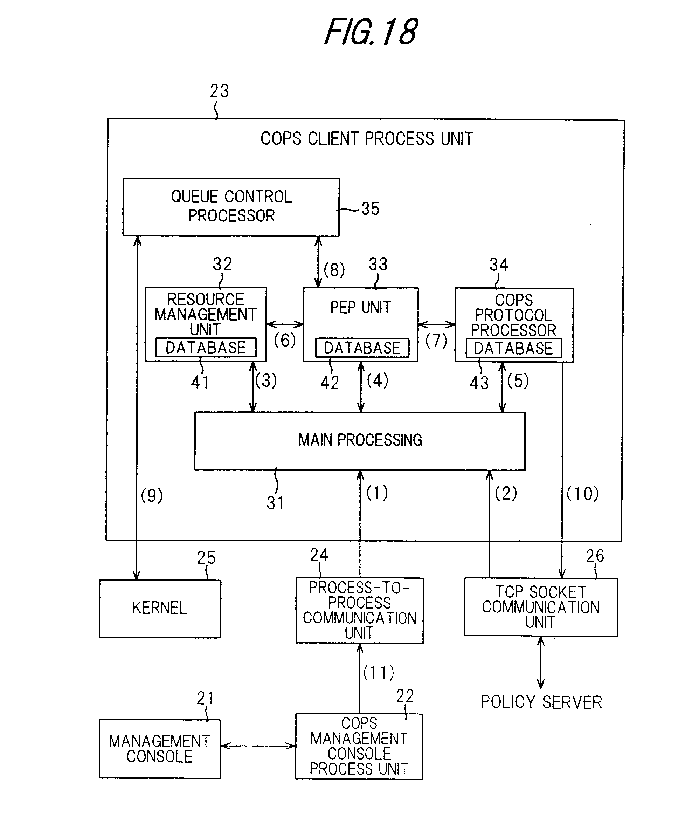

Fig. 18 is a block diagram illustrating the functional structure of a client;

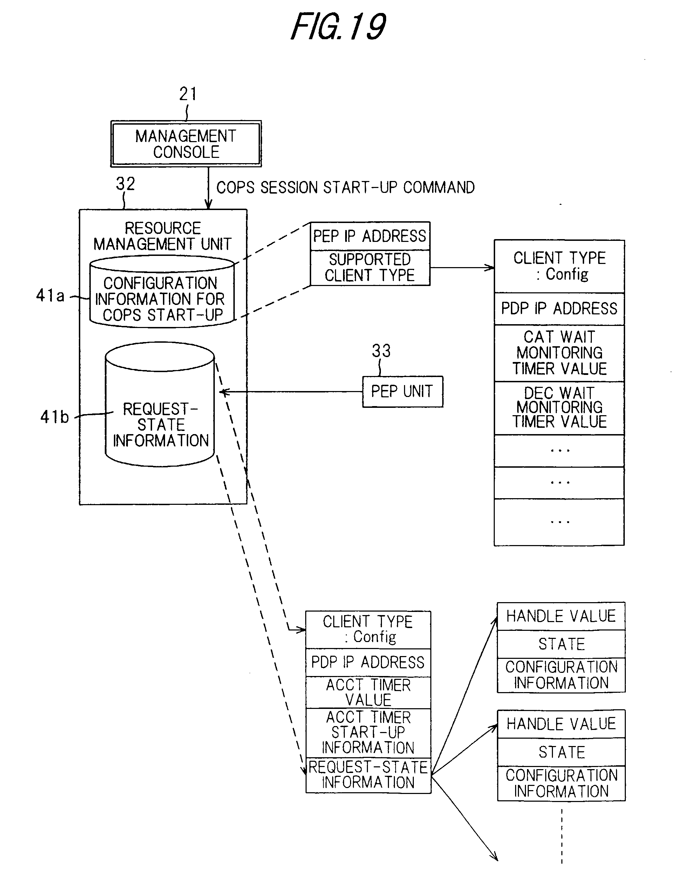

Fig. 19 is a diagram useful in describing a database having a resource management unit;

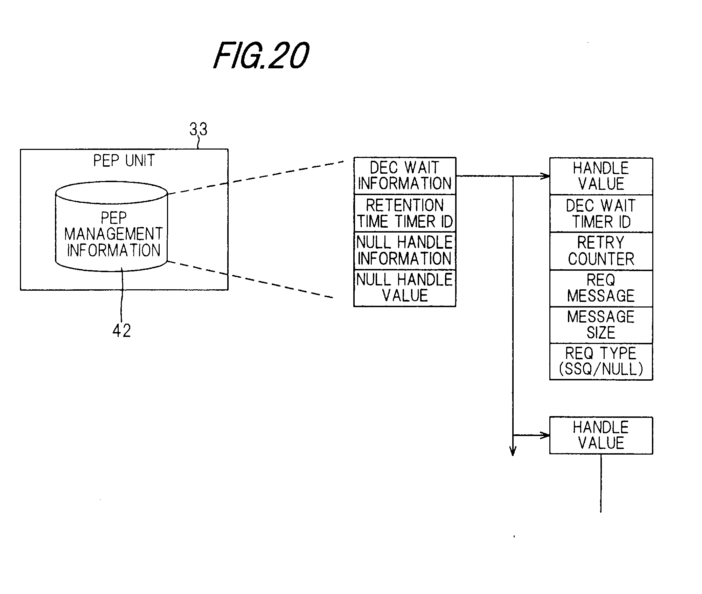

Fig. 20 is a diagram useful in describing a database having a PEP unit;

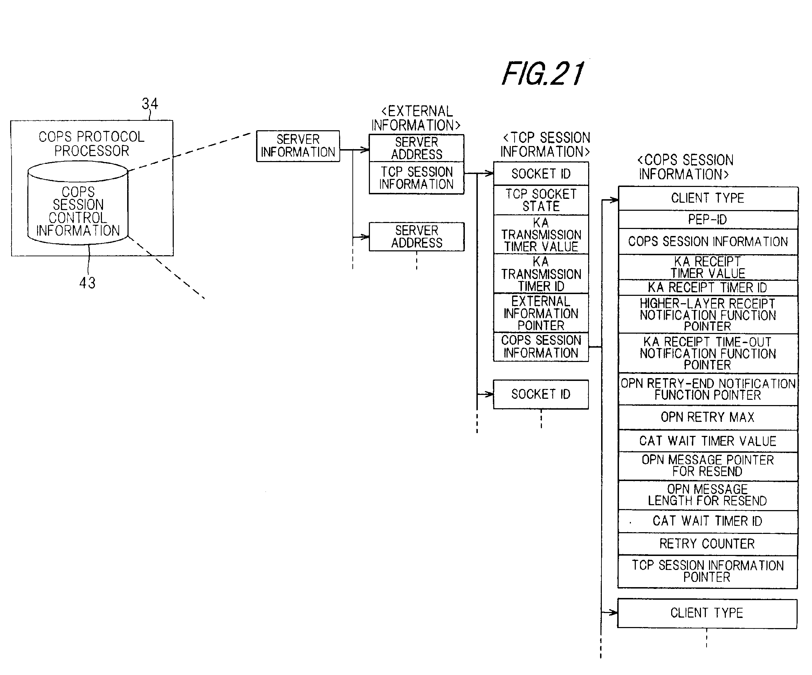

Fig. 21 is a diagram useful in describing a database having a COPS protocol processing unit;
Fig. 22 is a diagram useful in describing conventional admission control using a policy server;
Fig. 23 illustrates an architecture for unified management of a large-scale network;
Fig. 24 illustrates a COPS message list;
Fig. 25 illustrates a COPS message list;
Fig. 26 illustrates a common header;
Fig. 27 illustrates the general format of an object;
Figs. 28A, 28B, 28C, 28D, 28E, 28F and 28G illustrate specific formats of various objects;
Fig. 29 is a diagram useful in describing the procedure of REQ/DEC message communication;
Fig. 30 is a diagram useful in describing an REQ message;
Fig. 31 is a diagram useful in describing a DEC message; and
Fig. 32 is a diagram useful in describing an RPT message.

### (a) Network configuration

Fig. 1 is a diagram illustrating the configuration of a network according to the present invention. The network includes end terminals (hosts) 11, 12 such as personal computers, network routers 13₁ - 13₃ which operate as clients, a policy server 14 for configuring the clients in a variety of ways based upon policy information, and a directory server 15.

The directory server 15 possesses, in the form of a database, operation policy information, user information, device-specific information such as router-specific information and topology/path information, etc. The policy server 14 also has some of this information and, when necessary, acquires the information which it itself does not possess from the directory server 15 in accordance with LDAP (Lightweight Directory Access Protocol).

Fig. 2 illustrates an example of user information stored in the directory server. Specifically, the stored attributes of a user A are (1) the user identifier, (2) the IP address of an important host accessed in dedicated fashion by the user, (3) priority when the user utilizes the network, (4) bandwidth when the user utilizes the network, and (5) other user-specific information.

Fig. 3 illustrates an example of router information stored in the directory server. Specifically, the stored attributes of a router A are (1) the IP address of the router, (2) the queue control scheme (the name "priority" is entered here and signifies a priority control scheme), (3) the number (two) of queues, (4) the configuration protocol, (5) the names (Queue 1, Queue 2) assigned to the respective queues, (6) the attributes (priority, bandwidth, etc.) of each queue and (7) other router-specific information. Fig. 4 is a diagram useful in describing the priority control scheme of the router. The scheme includes a queue 13a of priority 1 (the highest priority), the queue 13b of priority 2 (the lowest priority), an allocation unit 13c for allocating input packets to the queues 13a, 13b, and a readout controller 13d for reading packets out of the queue 13a of highest priority in the order of arrival, outputting the packets to a line and, only when no packets are present in the queue of highest priority, for reading packets out of the queue 13b of lowest priority in the order of arrival and outputting the packets to the line. In order to subject a prescribed packet to high-priority processing, the fact that the packet is to be processed at the high priority is set in the allocation unit 3 (this is filter entry) together with the packet identification data. In response, from among the arriving packets, the allocation unit 13c inputs the packet having the above-mentioned identification data to the high-priority queue 13a so that the packet is subjected to high-priority processing.

Figs. 5A to 5C are diagrams useful in describing topology information. In a case where routers A to E are connected as shown in Fig. 5C, the topology information of router A is a list of IP addresses of the adjacent routers, as shown in Fig. 5A, and the topology information of router B is a list of IP addresses of the adjacent routers, as shown in Fig. 5B. In other words, Fig. 5A expresses the fact that router A having the IP address 192.168.15.1 has been connected to the three routers B, C and D. In regard to router B having the IP address 192.168.10.1 among these three routers, it is indicated that there are two adjacent routers, namely routers A and E, as shown in Fig. 5B. Thus, a list of other routers to which a certain router is connected is expressed as one table and these tables are prepared in a number equivalent to the number of nodes, thereby expressing the topology of the network.

Fig. 6 is a diagram illustrating the structure of the policy server 14. As shown in Fig. 6, the policy server 14 includes a database 14a, an event detector 14b, a configuration determination unit 14c, a device selector 14d, a configuration information generator 14e and a configuration information transmitter 14f. The database 14a has a network resource information storage area 14a-1 for storing topology/path information TPI and device-specific information MNI, and a policy information storage area 14a-2 for storing user information USI and operation policy information PLI. Information that becomes necessary is acquired from the directory server 15 in accordance with the LDAP protocol. The event detector 14b and configuration information transmitter 14f send and receive messages to and from the hosts 11, 12 and routers 13₁ - 13₃ in accordance with the COPS protocol.

The event detector 14b receives a COPS message that enters from a host or router and identifies and detects requests from the host or router based upon the message information. The configuration determination unit 14c determines based upon an event whether a prescribed configuration should be established for a router or the like. For example, when a user (the host 11) has requested a bandwidth B, a priority P and communication with the host 12, the configuration determination unit 14c refers to user information USI and checks to see whether communication at the requested bandwidth B and priority P has been allowed for the user. The configuration determination unit 14c refuses the communication request if such communication has not been allowed but orders the device selector 14d to select a router on the path between the hosts 11 and 12 if the above-mentioned communication has been allowed.

On the basis of the order from the configuration determination unit 14c, the device selector 14d selects the routers that are to undergo the prescribed configuring that conforms to the event. In the example described above, the device selector 14d selects the routers 13₁ - 13₃ on the path between the hosts 11 and 12 based upon an IP routing protocol (e.g., OSPF: Open Shortest Path First protocol). On the basis of the device-specific information MNI of the selected routers 13₁ - 13₃ and the request from the user, the configuration information generator 14e creates a message (a DEC message) that contains the content with which the routers are to be configured and transmits the message to the routers 13₁ - 13₃ from the configuration information transmitter 14f.

### (b) Server-initiative policy control

In policy control according to the prior art, a policy server establishes a prescribed configuration for a client based upon policy information only when a request is received from the router, i.e., the client. The server does not order configuring on its own.

By contrast, according to the present invention, a client 13 transmits a server-initiative approval message to the policy server 14. If the policy server 14 receives this message, policy server thenceforth specifies any configuration for the client voluntarily on its own initiative. There are two methods available for such policy control.

### (b-1) First policy control procedure

Fig. 7 is a diagram useful in describing a first policy control procedure based upon server initiative in accordance with the present invention.

(1) When it becomes possible for the client 13 to configure itself, the client 13 transmits a REQ message REQ#n (a server-initiative approval message) shown in Fig. 8 to the server 14 in order to grant the initiative to the server 14. It should be noted that in order to make the REQ message REQ#n the server-initiative approval message, client specifying information (client SI) in a client specifying information object OBJc is made null.

(2) If after receiving the server-initiative approval message it becomes necessary to configure the client 13 with regard to a prescribed item, the server 14 creates a DEC message (DEC#n) specifying this configuration and transmits the message to the client 13. In this case, the handle value of the DEC message is the same as a handle value #n of the server-initiative approval message.

The client 13 effects the configuration specified by the DEC message DEC#n and notifies the server 14 of the result of configuration by an RPT message (not shown).

Fig. 9 illustrates an example of the DEC message (DEC#n). By attaching named-decision data NDD, which describes the configuration command, to a decision object OBJd, the server 14 implements management and control such as configuration and resource allocation of the client 13. Examples of a policy execution request (configuration command) based upon named-decision data are "reserve three megabytes of bandwidth for user A" and "grant a high priority to user B", etc.

(3) Thereafter, whenever configuring of the client 13 is required, the server 14 creates a DEC message (DEC#n) having a handle value #n identical with that of the server-initiative approval message and transmits this message to the client 13 to specify the prescribed configuration.

Thus, DEC messages (DEC#n) specifying configuring conforming to the status of the network are transmitted to the client 13 successively on the initiative of the server, and the client 13 establishes a plurality of different configurations based upon the configurations specified by the DEC messages.

It is described above that whether a message is the server-initiative approval message or not is distinguished by whether or not the client specifying information (client SI) in the REQ message is null or not. It is also possible to distinguish whether a message is the server-initiative approval message or not by making the client SI a voluntary description (ex. "all") which is agreed between the server 14 and the client 13.

### (b-2) Second policy control procedure

Fig. 10 is a diagram useful in describing a second policy control procedure based upon server initiative in accordance with the present invention.

(1) When it becomes possible for the client 13 to configure itself, the client 13 transmits a REQ message REQ#n (a server-initiative approval message of handle value #n) shown in Fig. 8 to the server 14 in order to grant the initiative to the server 14.

(2) If after receiving the server-initiative approval message it becomes necessary to configure the client 13 with regard to a prescribed item, the server 14 creates a DEC message (DEC#n) specifying this configuration and transmits the message to the client 13. In this case, the handle value of the DEC message is the same as the handle value #n of the server-initiative approval message. More specifically, when it becomes necessary to configure the client in regard to a certain item (such as an instance where the server alters the routing information of a router in one batch when the router fails or an instance where the server limits the amount of traffic that traverses each router), the server 14 orders the client 13, by way of a DEC message, to perform the requiring configuring.

(3) The client 13 establishes the configuration indicated by the DEC message (DEC#n) and notifies the server 14 of the result of configuration by an RPT message (not shown). The client 13 thenceforth transmits a REQ message (a server-initiative approval message of handle value #n+1) in order to grant the initiative to the server 14.

(4) If after receiving the server-initiative approval message it becomes necessary to configure the client 13 with regard to a different item, the server 14 creates a DEC message (DEC#n+1) of handle value #n+1 specifying this configuration and transmits the message to the client 13.

(5) The client 13 establishes the configuration indicated by the DEC message (DEC#n+1) and notifies the server 14 of the result of configuration by an RPT message (not shown). The client 13 thenceforth transmits a REQ message (a server-initiative approval message of handle value #n+2) in order to grant the initiative to the server 14.

(6) As long as the client is in the configurable state, the server and client thenceforth repeat processing similar to that described above while incrementing the handle value.

### (c) Specific example of server-initiative configuration

### (c-1) Setting of default value when router is started up

Figs. 11A and 11B illustrate an example of a configuration setting in response to a voluntary configuration order from the policy server 14. This is useful in describing a case where a default setting is made when a router is started up. It is assumed here that the default setting is made in accordance with the second policy control procedure (Fig. 10) based upon server initiative.

(1) When started up, the routers 13₁ - 13₃ constituting the clients transmit a REQ message REQ#1 (a server-initiative approval message) in order to grant the initiative to the server 14.

(2) If the server-initiative approval message is received, the policy server 14 acquires the router information of these clients whenever necessary and constructs a default queue composition (number of queues, priority of each queue, bandwidth, etc.) based upon this router information. The server then creates a DEC message DEC#1, which is for configuring the clients with the above-mentioned queue composition, and transmits the message to the clients.

(3) The clients 13₁ - 13₃ configure the queue composition specified by the DEC message (DEC#1) and notify the server 14 of the results of configuration (e.g., the fact that configuration succeeded) by an RPT message RPT#1.

(4) The clients 13₁ - 13₃ thenceforth transmit a REQ message (a server-initiative approval message of handle value #2) in order to grant the initiative to the server 14.

(5) If a new server-initiative approval message is received, the server 14 creates default filter-entry information based upon the router information. The server 14 then creates a DEC message DEC#2, which is for configuring the clients with the above-mentioned filter-entry information, and transmits the message to the clients.

As long as the clients 13₁ - 13₃ are in the configurable state, the server 14 thenceforth repeats the processing for various settings in a manner similar to that described above while incrementing the handle value.

### (c-2) Modification of queue composition in accordance request from user

Figs. 12A and 12B illustrate a specific example in which queue composition is modified by the initiative of the policy server in accordance with a request from the user.

(1) The routers 13₁ - 13₃ constituting the clients transmit a REQ message REQ#1 (a server-initiative approval message) in order to grant the initiative to the server 14.

(2) If the server-initiative approval message is received, the policy server 14 takes the initiative and establishes a new configuration for the clients or changes the configuration in association with a change in the status of the network.

By way of example, if the host 11 (user A) issues a communication request to the host 12 (user B), the policy server 14 acquires user information concerning user A and router topology information from the directory server 15 whenever necessary. Next, using the Dijkstra algorithm, the policy server 14 calculates the shortest path based upon the router topology information and the IP addresses of the users A, B, obtains the IP routing information from the user A to the user B, and specifies the relaying routers 13₁ - 13₃ between users A and B using this IP routing information. The policy server 14 further ascertains the bandwidth (= 3 MB) and priority (= 8) from the information concerning user A.

(3) Next, the server creates a DEC message DEC#1 for constructing a priority queue of bandwidth 3 MB in the clients 13₁ - 13₃.

(4) The clients 13₁ - 13₃ construct the priority queue specified by the DEC message (DEC#1) and notify the server 14 of the results of configuration (e.g., the fact that configuration succeeded) by an RPT message RPT#1.

(5) The clients 13₁ - 13₃ thenceforth transmit a new REQ message (a server-initiative approval message of handle value #2) in order to grant the initiative to the server 14.

(6) If a new server-initiative approval message REQ#2 is received, the server 14 creates filter-entry information for queuing the flow of user B from user A in the priority queue. The server 14 then creates a DEC message DEC#2, which is for configuring the clients with the above-mentioned filter-entry information, and transmits the message to the clients 13₁ - 13₃.

(7) The clients 13₁ - 13₃ configure the filter-entry information specified by the DEC message (DEC#2) and notify the server 14 of the results of configuration (e.g., the fact that configuration succeeded) by an RPT message RPT#2. As a result, three megabytes of bandwidth for user A → B are ensured.

(8) The clients 13₁ - 13₃ thenceforth transmit a new REQ message REQ#3 (a server-initiative approval message of handle value #3) in order to grant the initiative to the server 14.

As long as the clients 13₁ - 13₃ are in the configurable state, the server 14 thenceforth subjects each client to a prescribed configuration or changes the configuration suitably in accordance with a change in the status of the network.

### (c-3) Modification of routing information at occurrence of failure

If there is no communication activity between the policy server 14 and the clients 13₁ - 13₃ upon elapse of 1/4 to 3/4 of a basic keep-alive timer value specified by a CAT message, the clients transmit a KA message to the policy server. In response to the KA message from the clients, the policy server 14 transmits a KA message to the clients. As a result, the clients and policy server recognize that the connection is normal by receiving the KA message within the period of time indicated by the KA timer value. However, if there is no communication activity also within the period of time indicated by the KA timer value, the policy server 14 judges that the client is down.

Figs. 13A and 13B illustrate a specific example in which routing information is modified by the initiative of the policy server at occurrence of a failure.

(1) The routers 13₁ - 13₃ constituting the clients transmit a REQ message REQ#n (a server-initiative approval message) in order to grant the initiative to the policy server 14. If the server-initiative approval message is received, the policy server 14 takes the initiative and establishes a new configuration for the clients or changes the configuration in association with a change in the status of the network.

(2) If under these conditions there is no communication activity between the policy server 14 and the client 13₂ within the period of time indicated by the KA timer value, (3) the policy server 14 judges that the client 13₂ is down.

(4) From the topology information the policy server 14 obtains the clients 13₁ and 13₃ neighboring the faulty client 13₂. Next, the policy server 14 creates a DEC message DEC#2, which is for deleting the path to the router 13₂, from the routing table of the client 13₁, and transmits this message to the client 13₁. The policy server 14 further creates a DEC message DEC#n for deleting the path to the router 13₂ from the routing table of the client 13₃ and transmits this message to the client 13₃.

(5) The clients 13₁, 13₃ delete the paths to the client 13₂ from the routing tables by the DEC message DEC#n, notify the server 14 of the result of deletion by an RPT message (not shown) and then transmit a new REQ message REQ#n+1 (server-initiative approval message) in order to grant the initiative to the policy server 14.

(6) If a new server-initiative approval message is received, the server 14 creates a DEC message DEC#n+1, which is for adding a path to the router 13₄ to the routing table of the client 13₁, and transmits this message to the client 13₁. The server 14 further creates a DEC message DEC#n+1, which is for adding a path to the router 13₄ to the routing table of client 13₃, and transmits this message to the client 13₃.

(7) The clients 13₁, 13₃ add the paths to the client 13₄ to the routing tables, notify the server 14 of the result of deletion by an RPT message (not shown) and then transmit a new REQ message REQ#n+2 (server-initiative approval message) in order to grant the initiative to the policy server 14.

(8) - (12) If the client 13₂ is restored after the new server-initiative approval message is received, the server 14 exchanges messages with the clients 13₁, 13₃ in order to restore the original routing tables.

(13) When the restored client 13₂ is started up, the client 13₂ transmits the REQ message REQ#1 (server-initiative approval message) in order grant the initiative to the server 14.

(14) If the server-initiative approval message REQ#1 is received, the server 14 acquires the routing table of this client from the directory server 15, creates a DEC message DEC#1 for configuring the client 13₂ with this routing table and then transmits the message to the client 13₂.

(15) The client 13₂ subjects the routing table to the configuration specified by the DEC message (DEC#2), notifies the server 14 of the result of configuration (e.g., the fact that configuration succeeded) by an RPT message, and transmits a new REQ message REQ#2 (a server-initiative approval message of handle value #2) in order to grant the initiative to the server 14.

As long as the clients 13₁ - 13₃ are in the configurable state, the server 14 thenceforth subjects each client to a prescribed configuration or changes the configuration suitably in accordance with a change in the status of the network.

### (d) Timer processing for monitoring receipt of DEC message

In order to establish a state in which a client can be configured voluntarily by the initiative of the server, it is required that the server be receiving the server-initiative approval message. This makes necessary means for recognizing that the server-initiative approval message has arrived at the server when the server-initiative approval message is transmitted, and means for executing retry in a case where arrival of the message could not be confirmed. According to the present invention, these means are provided by monitoring receipt of the DEC message.

### (d-1) If there is a response indicating receipt of the server-initiative approval message

Fig. 14A is a diagram useful in describing a procedure in a case where there is a response indicating receipt of the server-initiative approval message from the server in timer processing for monitoring receipt of the DEC message.

(1) The COPS client 13 transmits the server-initiative approval message (an REQ message REQ#1 in which the client specifying information Client SI is null) to the COPS server 14.

(2) After the server-initiative approval message is transmitted, the client 13 sets a timer for monitoring receipt of a solicited DEC message. The solicited DEC message is a DEC response to a client request.

(3) Meanwhile, if the server-initiative approval message is received from the client 13, the server 14 notifies the client 13 by a solicited DEC message DEC#1 of the fact that the server-initiative approval message has been accepted.

(4) If the solicited DEC message DEC#1 is received within a period of time T_{S1} measured by the monitoring timer, the client 13 recognizes that the server-initiative approval message has arrived correctly, clears the timer and waits for a configuration order from the server 14.

(5) If it subsequently becomes necessary to establish a new configuration for the client 13 or to change the configuration thereof owing to change in the network, for example, then the server creates an unsolicited DEC message and transmits this message to the client. The client 13 effects the prescribed configuration based upon the configuration order contained in this DEC message. The unsolicited DEC message is a DEC message, which is indicative of an additional setting, from the server in response to a server-initiative approval message REQ#1 having a handle value #1 already requested by the client.

### (d-2) If there is no response indicating receipt of the server-initiative approval message

Fig. 14B is a diagram useful in describing a procedure in a case where there is no response indicating receipt of the server-initiative approval message from the server in timer processing for monitoring receipt of the DEC message.

(1) The client 13 transmits a server-initiative approval message REQ#1 (an REQ message in which the handle value is #1 and client specifying information Client SI is null) to the server 14. (2) At the same time, the client 13 sets the timer for monitoring receipt of the solicited DEC message.

(3) If the solicited DEC message DEC#1 is not received even when the period of time T_{S1} measured by the monitoring timer elapses, the client 13 regards this as a communication failure, transmits the DRQ message DRQ#1 to the server 14 and discards the handle value #1 of the server-initiative approval message REQ#1.

(4) Next, the client 13 again transmits a server-initiative approval message REQ#2 (an REQ message in which the handle value is #2 and client specifying information Client SI is null) to the server 14. (5) At the same time, the client 13 sets the timer for monitoring receipt of the solicited DEC message.

If the solicited DEC message DEC#1 is received within the period of time T_{S1} measured by the monitoring timer, the client 13 recognizes that the server-initiative approval message has arrived correctly, clears the timer and waits for a configuration order from the server 14.

### (e) Timer processing for monitoring receipt of RPT message

In order to voluntarily order the configuring of a client by the initiative of the server, it is required that the server 14 manage the status of the client 13 in unified fashion. This makes necessary means by which the server ascertains the result of configuring the client based upon a configuration order from the server, and means for executing recovery processing in a case where the server could not ascertain the result. According to the present invention, these means are provided by monitoring receipt of the RPT message.

### (e-1) If there is a response indicating receipt of the RPT message

Fig. 15A is a diagram useful in describing a procedure in a case where the RPT message is received from the client in timer processing for monitoring receipt of the RPT message.

(1) The client 13 transmits the server-initiative approval message (an REQ message REQ#1 in which the client specifying information Client SI is null) to the server 14.

(2) If the server-initiative approval message is received from the client 13, the server 14 immediately notifies the client 13 by a solicited DEC message DEC#1 of the fact that the server-initiative approval message has been accepted.

(3) In response to receipt of the solicited DEC message DEC#1, the client 13 recognizes that the server-initiative approval message has arrived at the server correctly and then waits for a configuration order from the server 14.

(4) If it subsequently becomes necessary to establish a new configuration (configuration A) for the client 13 owing to a change in the network, for example, then the server creates an unsolicited DEC message and transmits this message to the client.

(5) The server further sets the monitoring timer for receiving the RPT message.

(6) The client 13 effects the configuration A based upon this DEC message and notifies the server 14 of the result of configuration by way of the RPT message.

(7) If the RPT message RPT#1 is received within a period of time T_{S2} measured by the monitoring timer, the server 14 clears the timer. As a result, the server 14 is capable of ascertaining the result of executing the requested configuration for the client 13 and can manage the status of the client 13 in a unified manner.

### (e-2) If there is no response indicating receipt of the RPT message

Fig. 15B is a diagram useful in describing a procedure in a case where the RPT message has not been received from the client in timer processing for monitoring receipt of the RPT message.

(1) The client 13 transmits a server-initiative approval message (an REQ message REQ#1 in which the client specifying information Client SI is null) to the server 14.

(2) If the server-initiative approval message is received from the client 13, the server 14 immediately notifies the client 13 by a solicited DEC message DEC#1 of the fact that the server-initiative approval message has been accepted.

(3) In response to receipt of the solicited DEC message DEC#1, the client 13 recognizes that the server-initiative approval message has arrived at the server correctly and then waits for a configuration order from the server 14.

(4) If it subsequently becomes necessary to establish a new configuration (configuration A) for the client 13 owing to a change in the network, for example, then the server creates an unsolicited DEC message and transmits this message to the client.

(5) The server 14 further sets the monitoring timer for receiving the RPT message.

(6) If the RPT message is not sent back from the client even when a set time T_{S2} elapses, the server 14 regards this as a communication failure and issues a request to delete a request state having a handle value #1 the same as that of a DEC message that issued the configuration request.

(7) On the basis of the request-state deletion order of handle value #1, the client 13 executes deletion processing and reports the result of deletion to the server 14 by an RPT message. As a result, the server 14 recognizes that the request state of handle value #1 has been deleted.

(8) Next, the client 13 transmits a DRQ message DRQ#1 to the server 14 and orders that the handle value #1 of the server-initiative approval message REQ#1 be discarded. The server 14 deletes the handle value #1 in response to the DRQ message.

The client 13 thenceforth sends the server 14 a new server-initiative approval message REQ#2 having a different handle value, namely handle value #2, thereby establishing the server-initiative state.

### (f) Recovery processing when message communication fails

If communication failure occurs in the communication of messages between a server and client, it is necessary to prevent an inconsistency in the configurations of the server and client. More specifically, it is required that the configured states indicated by the handle values contained in messages at the time of communication failure be made to agree with each other in the server and client. For example, if the client 13 does not send back an RPT message within a stipulated period of time in response to a voluntary configuration request from the server 14 that used the handle value #1 in message communication between the server and the client, all states having the handle value #1 must be deleted and reconfiguration must be carried out to maintain the subsequent reliability of policy control and consistency of messages. However, according to the first policy control based upon server initiative shown in Fig. 7, there is the possibility that a plurality of states will be associated with the one handle value #1 and it will be necessary to obtain all of these states and perform reconfiguring. This will require a great amount of time.

Accordingly, the present invention is such that in order to return the client and server states rapidly to the same states that prevailed prior to the failure, the server preserves the configuration history of the client and resets the preserved values in the client after the server-initiative approval message is received again.

### (f-1) First recovery processing

Fig. 16 is a diagram useful in describing a recovery processing procedure when message communication fails.

(1) The client 13 transmits the server-initiative approval message (an REQ message REQ#1 in which the client specifying information Client SI is null) to the server 14.

(2) If the server-initiative approval message is received from the client 13, the server 14 notifies the client 13 by a solicited DEC message DEC#1 of the fact that the server-initiative approval message has been accepted.

(3) In response to receipt of the solicited DEC message DEC#1, the client 13 recognizes that the server-initiative approval message has arrived correctly and then waits for a configuration order from the server 14.

(4) If it subsequently becomes necessary to establish a new configuration (configuration A) for the client 13 owing to a change in the network, for example, then the server creates an unsolicited DEC message DEC#1 (configuration A) and transmits this message to the client.

(5) The server 14 further sets the monitoring timer for receiving the RPT message and (6) performs monitoring to determine whether the RPT message is received within a set time T_{S2}.

(7) If the RPT message is received within the set time T_{S2}, the server 14 clears the timer.

(8) If it subsequently becomes necessary to establish new configurations (B, C, D) for the client, steps (4) to (7) are repeated.

(9) If the RPT message is not sent back from the client upon elapse of the set time T_{S2} (i.e., if time-out occurs), then the server regards this as communication failure.

(10) In response to the time-out, the server 14 preserves the existing request state (configuration histories A, B, C) of handle value #1.

(11) Next, the server 14 issues a request to discard the configurations (A, B, C, D) specified by handle value #1 identical with that of the DEC message DEC#1 that requested the configuration D.

(12) The client 13 executes deletion processing based upon the configuration discard order of handle value #1 and reports the result to the server 14 by an RPT message. As a result, the server 14 recognizes the fact that the configurations (A, B, C, D) specified by handle value #1 have been discarded from the client.

(13) Next, the client 13 transmits a DRQ message DRQ#1 to the server 14 and orders deletion of the handle value #1 of the server-initiative approval message REQ#1. The server 14 deletes the handle value #1 in response to the DRQ message.

(14) The client 13 thenceforth transmits a new server-initiative approval message REQ#2 (an REQ message REQ#2 in which the client specifying information Client SI is null) having a different handle value, namely handle value #2, thereby establishing the server-initiative state.

(15) If the server-initiative approval message is received from the client 13, the server 14 immediately notifies the client 13 by a solicited DEC message DEC#2 of the fact that the server-initiative approval message has been accepted.

(16) In response to receipt of the solicited DEC message DEC#2, the client 13 recognizes that the server-initiative approval message has arrived at the server correctly and then waits for a configuration order from the server 14.

(17) In order to reconfigure the client with the states (A, B, C) that were preserved at step (10) after the solicited DEC message DEC#2 is sent, the server 14 correlates all of these states with the handle value #2 and creates an unsolicited DEC message DEC#2 which it then transmits to the client 13.

(18) The client 13 performs reconfiguration based upon this DEC message and notifies the server 14 of the result of configuration by way of an RPT message.

Thus, the configuration history is preserved in the server and the server uses the configuration history to reconfigure the client. This makes it possible to shorten the time required for reconfiguring.

### (f-2) Second recovery processing

It is described above that the configuration history is preserved in the server. However, it is also possible to adopt an arrangement in which the configuration history is preserved in a client so that reconfiguration may be performed using the history preserved voluntarily in the client without waiting for reconfiguration from the server.

Fig. 17 is a diagram useful in describing another recovery processing procedure when message communication fails. Here (1) to (9) are identical with the like numbered steps of the procedure shown in Fig. 16.

(10) If the RPT message is not sent back from the client upon elapse of the set time T_{S2} (i.e., if time-out occurs), then the server 14 issues a request to discard the configurations (A, B, C, D) specified by handle value #1 identical with that of the DEC message DEC#1 that requested the configuration D at step (8).

(11) If the discard request is received, the client 13 preserves the existing states of handle value #1 [configuration histories A, B, C (D may be included if the configuring ends normally)].

(12) The client thenceforth executes discard processing and reports the result of deletion to the server 14 by an RPT message. As a result, the server 14 recognizes that the configurations specified by handle value #1 have been discarded from the client.

(13) Next, the client 13 transmits a DRQ message DRQ#1 to the server 14 and orders deletion of the handle value #1 of the server-initiative approval message REQ#1. The server 14 deletes the handle value #1 in response to the DRQ message.

(14) The client 13 thenceforth transmits a new server-initiative approval message REQ#2 (an REQ message REQ#2 in which the client specifying information Client SI is null) having a different handle value, namely handle value #2, thereby establishing the server-initiative state.

(15) If the server-initiative approval message is received from the client 13, the server 14 immediately notifies the client 13 by a solicited DEC message DEC#2 of the fact that the server-initiative approval message has been accepted.

(16) In response to receipt of the solicited DEC message DEC#2, the client 13 recognizes that the server-initiative approval message has arrived at the server correctly and then waits for a configuration order from the server 14. (The server-initiative state is established.)

(17) The client creates a message REQ#3, correlates the states that were preserved at step (11) and seeks permission for reconfiguration from the server. The client thenceforth waits for a configuration order from the server.

(18) The server determines whether it is permissible to implement the states associated with REQ#3 and sends the result to the client associated with DEC#3.

(19) The client effects configuring in accordance with the order from the server and notifies the server of the result by way of RPT#3.

Thus, the configuration history is preserved in the client and the configuration history is used to reconfigure the client and the server. This makes it possible to shorten the time required for reconfiguring.

### (g) Functional structure of client

Fig. 18 is a functional block diagram of a client. As shown in Fig. 18, the client includes a management console 21, a COPS management console process unit 22, a COPS client process unit 23, a process-to-process communication unit 24, a kernel 25 and a TCP socket communication unit 26.

The management console 21 is for (1) entering a COPS-session start command in order to start a COPS session with a COPS server, (2) entering a COPS-session stop command in order to stop a COPS session with a COPS server, (3) entering a request-state information acquisition command for collecting request-state information. The process-to-process communication unit 24 controls communication between the processes 22 and 23. The TCP socket communication unit 26 communicates with an external application (policy server) through a communication application socket. The kernel 25 exercises various control operations, e.g., queue control based upon the composition of a constructed queue.

The COPS client process 23 has a main processor 31, a resource management unit 32, a PEP (Policy Enforcement Point) unit 33, a COPS protocol processor 34 and a queue control processor 35. A resource management unit 32 has a database 41 storing configuration information for COPS start-up and request-state information, etc., the PEP unit 33 has a database 42 storing PEP-unit management information, and the COPS protocol processor 34 has a database 43 storing COPS-session control information.

Fig. 19 is a diagram useful in describing databases possessed by the resource management unit 32. First and second databases 41a, 41b are provided as the databases. The first database 41a stores the configuration information for COPS start-up (a connection-destination server address for setting up a COPS connection, timer setting information necessary for a COPS sequence, etc.). The second database 41b stores the request-state information. In a case where a client issues a prescribed request to a server using an REQ message and the request is granted by the server, the requested information and information set by the request is stored as request-state information in the database 41b in association with a handle value. The request-state information is updated, or request-state information is created anew, under control of the PEP unit 33 when a DEC message or the like is received from the server.

Fig. 20 is a diagram useful in describing the database 42 possessed by the PEP unit 33. The database 42 stores DEC wait information (handle values, DEC wait timers, REQ messages, etc.), null handle values, etc.

Fig. 21 is a diagram useful in describing the database 43 possessed by the COPS protocol processor 34. The database 43 stores the minimum necessary information for sending and receiving COPS messages and stores client type, information for performing KA control, information for executing processing for connection/linkage of TCP connections and COP connections, etc.

An overview of interfaces (1) - (11) between functional blocks in Fig. 18 is as follows:

The interface (1) allows the process-to-process communication unit 24 to report to the main processor 31 so that a COPS command sent from the management console process unit 22 may be communicated to the main processor 31.

The interface (2) allows the TCP socket communication unit 26 to report to the main processor 31 so that a received COPS message may be communicated to the main processor 31.

The interface (3) interfaces the main processor 31 and the resource management unit 32 so that when COPS is started up, the main processor 31 may request the resource management unit 32 for an initial setting such as configuration information for COPS start-up.

The interface (4) interfaces the main processor 31 and PEP unit 33 so that the main processor 31 may perform the following operations with respect to the PEP unit 33:
(1) PEP unit initializing request/response;
(2) COPS open command request/response;
(3) COPS close command request/response;
(4) request-state information reference request/response; and
(5) notification of time-out.

The interface (5) interfaces the main processor 31 and COPS protocol processor 34 so that the main processor 31 may perform the following operations with respect to the COPS protocol processor 34:
(1) notification and response of occurrence of socket reception, and
(2) notification of time-out.

The interface (6) interfaces the PEP unit 33 and the resource management unit 32 so that the PEP unit 33 may perform the following operations with respect to the resource management unit 32:
(1) creation request and response regarding request-state information;
(2) reference request and response regarding request-state information; and
(3) deletion request and response regarding request-state information.

The interface (7) interfaces the PEP unit 33 and the COPS protocol processor 34 so that the PEP 33 may perform the following operations with respect to the COPS protocol processor 34:
(1) COPS session open request/response;
(2) COPS session close request/response; and
(3) request/response regarding transmission of various COPS messages;
and so that the COPS protocol processor 34 may perform the following operations with respect to the PEP unit 33:
(1) notification of receipt of various COPS messages;
(2) notification of cut-off of COPS session;
(3) notification of time-out of KA-receipt monitoring timer; and
(4) notification of retry-end of OPN session transmission.

The interface (8) interfaces the PEP unit 33 and the queue control processor 35 so that the PEP 33 may perform the following operations with respect to the queue control processor 35:
(1) initialization request/response;
(2) priority-information setting/changing/deletion request/response;
(3) queue-information setting/changing/deletion request/response; and
(4) filter-information setting/changing/deletion request/response.

The interface (9) interfaces the queue control processor 35 and the kernel 25 so that the queue control processor 35 may perform the following operations with respect to the kernel 25:
(1) initialization request/response;
(2) priority-information setting request/response;
(3) queue-information setting/deletion request/response; and
(4) filter-information setting/deletion request/response.

The interface (10) interfaces the COPS protocol processor 34 and the TCP socket communication unit 26 so that the COPS protocol processor 34 may perform the following operations with respect to the TCP socket communication unit 26:
(1) COPS session transmission request;
(2) COPS socket open request; and
(3) COPS socket close request.

The interface (11) is for performing the following operation with respect to the process-to-process communication unit 24 based upon a command input from the management console 21:
(1) COPS session open request;
(2) COPS session close request; and
(3) request-state information reference request.

If a COPS session start command is entered from the management console 21, the process-to-process communication unit 24 notifies the main processor 31 of this command. In response, the main processor 31 causes the resource management unit 32 to preserve the configuration information for COPS start-up in the database 41. Further, the main processor 31 requests the PEP unit 33 for a COPS open command, and the PEP unit 33 requests the COPS protocol processor 34 for COPS session open.

If the COPS protocol processor 34 opens the COPS session, then the PEP unit 33 creates a server-initiative approval message REQ#n and transmits the message from the COPS protocol processor 34 to the policy server via the TCP socket communication unit 26.

Further, a DEC message DEC#n from the policy server is transmitted from the TCP socket communication unit 26 to the PEP unit 33 via the main processor 31 and COPS protocol processor 34. If the received DEC message DEC#n is a message specifying a change in the queue composition, the PEP unit 33 inputs the queue composition information to the queue control processor 35 and the latter changes the queue composition based upon the entered queue composition information. Further, the PEP unit 31 instructs the resource management unit 32 to newly create, change, refer to or delete request-state information.

The present invention has the following effects:
(1) If the client is in a configurable state, any configuration can be specified by a server voluntarily at any time. Accordingly, it is possible to obtain effects similar to those obtained when the configuration initiative is provided to the server artificially. When a new configuration or a change in configuration becomes necessary owing to a change in the status of the network (collision, failure, etc.), the server, without waiting for a request from a client, is capable of rapidly issuing orders in regard to all items agreed upon by the server and client.
(2) In accordance with the second policy control method based upon server initiative, various configuration orders can be identified using handle values. As a result, a configuration can be added on, changed or deleted with ease and the dealing with failures is facilitated.
(3) A client is capable of recognizing whether the server-initiative state is in effect. If the server-initiative state is not in effect, therefore, the server can immediately resend the server-initiative approval message. As a result, it is possible to establish a state (the server-initiative state) in which any configuration can be established voluntarily at any time by the server for the sake of the client.
(4) If the server-initiative approval message does not arrive at the server upon elapse of a stipulated period of time, the client resends this message immediately. As a result, suspension of processing due to communication failure can be minimized and system reliability can be improved.
(5) A server can ascertain by an RPT message whether execution of a configuration specified for a client has succeeded or not. As a result, the server can ascertain the status of the client reliably.
(6) If a DEC message specifying a configuration does not arrive at a client upon elapse of a stipulated period of time, the server re-executes processing. As a result, suspension of processing due to communication failure can be minimized and system reliability can be improved by re-execution of processing.
(7) If communication failure has occurred in message communication between the server and client, the server preserves the configuration history and reconfigures the client using this configuration history. This makes it possible to shorten the time required for reconfiguration.
(8) When a server-initiative approval message has been deleted, a new server-initiative approval message is transmitted from the client. This makes it possible to continue server-initiative configuration control.
(9) If communication failure has occurred in message communication between the server and client, the client preserves the configuration history and, without waiting for reconfiguration from the server, performs reconfiguration using the voluntarily stored history. This makes it possible to shorten the time required for reconfiguration.

As many apparently widely different embodiments of the present invention can be made without departing from the spirit and scope thereof, it is to be understood that the invention is not limited to the specific embodiments thereof except as defined in the appended claims.

## Claims

1. A communication system having a network device constructing a network, and a network-device control apparatus for responding to a request from the network device by executing predetermined processing, said network device, which is a client, and said network-device control apparatus, which is a server, sending and receiving information in accordance with a communications protocol, wherein
said client transmits a server-initiative approval message to said server for granting initiative to the server;
said server, upon receiving the server-initiative approval message, transmits on its own initiative one or more configuration messages which specify required configurations to said client when it becomes necessary to configure said client; and
said client performs configuring based upon each configuration message.

2. The system according to claim 1, wherein said client incorporates a handle value in the server-initiative approval message, said server specifies required configurations for the client inclusive of said handle value in said configuration messages, and said client and said server manage each configuration by a single handle value.

3. The system according to claim 1 or 2, wherein when the server-initiative approval message has been received, said server sends said client a decision message indicating that the server-initiative approval message has been received.

4. The system according to claim 3, wherein said client monitors receipt of the decision message after it has transmitted the server-initiative approval message and, if the decision message is not received within a stipulated period of time, restores its status from that following transmission of the server-initiative approval message to that which prevailed before the server-initiative approval message was transmitted, and transmits a new server-initiative approval message.

5. The system according to claim 1, 2, 3, or 4, wherein said client sends said server a report message for reporting result of execution of a configuration that has been specified by said server, and said server performs unified management of configured state of the client based upon said report message.

6. The system according to claim 5, wherein said server monitors receipt of the report message after it has transmitted a configuration message and, if the report message is not received within a stipulated period of time, sends said client a cancellation message discarding configurations specified by configuration messages thus far and specifying cancellation of the server-initiative state.

7. The system according to claim 6, wherein before said server discards configurations and sends said client the cancellation message specifying cancellation of the server-initiative state, said server preserves a configuration history of configurations that have been established for said client thus far; and
when the server-initiative approval message is sent from said client to said server again after said server has sent said client said cancellation message, said server creates a configuration message based upon the preserved configuration history and transmits this configuration message to said client.

8. The system according to claim 6 or 7, wherein when said client has received said message from said server discarding configurations specified by configuration messages thus far, said client preserves a configuration history prevailing thus far, sends said server a new server-initiative approval message after it executes discard processing conforming to said discard message, and subsequently creates a message, which requests said server for configuration permission, based upon the preserved configuration history, and transmits this message to said server.

9. The system according to any preceding claim, wherein when said client has canceled the server-initiative state for some reason, said client transmits a new server-initiative approval message to said server.

10. A communication system having a network device constructing a network, and a network-device control apparatus for responding to a request from the network device by executing predetermined processing, said network device, which is a client, and said network-device control apparatus, which is a server, sending and receiving information in accordance with a communications protocol, wherein
said client transmits a server-initiative approval message to said server for granting initiative to the server;
said server, in response to receipt of the server-initiative approval message, transmits on its own initiative a configuration message which specifies a required configuration to said client when it becomes necessary to configure said client;
said client performs configuring specified by said configuration message, and then transmits a new server-initiative approval message to said server; and
thenceforth said client manages each configuration from said server in similar fashion.

11. The system according to claim 10, wherein said client incorporates a handle value in the server-initiative approval message, said server specifies a required configuration inclusive of said handle value in said configuration message, and said client and said server manage each configuration by a single handle value.

12. The system according to claim 10 or 11, wherein when the server-initiative approval message has been received, said server sends said client a decision message indicating that the server-initiative approval message has been received.

13. The system according to claim 12, wherein said client monitors receipt of the decision message after it has transmitted the server-initiative approval message and, if the decision message is not received within a stipulated period of time, restores its status from that following transmission of the server-initiative approval message to that which prevailed before the server-initiative approval message was transmitted, and transmits a new server-initiative approval message.

14. The system according to claim 10, 11, 12, or 13, wherein said client sends said server a report message for reporting result of execution of a configuration that has been specified by said server, and said server performs unified management of configured state of the client based upon said report message.

15. The system according to claim 14, wherein said server monitors receipt of the report message after it has transmitted a configuration message and,if the report message is not received within a stipulated period of time, sends said client a message specifying discard of a configuration history based upon said configuration messages and cancellation of the server-initiative state.

16. The system according to any of claims 10 to 15, wherein when said client has canceled the server-initiative state for some reason, said client transmits a new server-initiative approval message to said server.

17. A network-device control apparatus in a communication system having a network device constructing a network, and the network-device control apparatus for responding to a request from the network device by executing predetermined processing, said network device, which is a client, and said network-device control apparatus, which is a server, sending and receiving information in accordance with a communications protocol, comprising:
means for receiving from said network device a server-initiative approval message to grant initiative to the network-device control apparatus;
means for creating, in response to receipt of the server-initiative approval message, one or more configuration messages which specify required configurations when it becomes necessary to configure said network device; and
means for transmitting each configuration message to configure the network device based upon each configuration message.

18. A network-device control apparatus in a communication system having a network device constructing a network, and the network-device control apparatus for responding to a request from the network device by executing predetermined processing, said network device, which is a client, and said network-device control apparatus, which is a server, sending and receiving information in accordance with a communications protocol, comprising:
means for receiving from said network device a server-initiative approval message to grant initiative to the network-device control apparatus;
means server-initiative approval message, a configuration message which specifies a required configuration for said network device when it becomes necessary to configure said network device; and
means for transmitting the configuration message to said network device to configure said network device.

19. A network device in a communication system having the network device, which constructs a network, and a network-device control apparatus for responding to a request from the network device by executing predetermined processing, said network device, which is a client, and said network-device control apparatus, which is a server, sending and receiving information in accordance with a communications protocol, comprising:
means for transmitting to said network-device control apparatus a server-initiative approval message for granting initiative to said network-device control apparatus; and
means for performing a required configuration in response to an order from said network-device control apparatus.

20. Software which, when run on a client and a server of a communications system, causes the client and the server to carry out the functions specified in any one of claims 1 to 16.
